# EUROPEAN PATENT APPLICATION

(11) **EP 1 699 236 A1**
(43) Date of publication of application: **06.09.2006**
(21) Application number: 04807586.5
(22) Date of filing: 22.12.2004
(51) Int. Cl.: H04N 5/445

(54) **RECOMMENDED PROGRAM NOTIFICATION METHOD AND RECOMMENDED PROGRAM NOTIFICATION DEVICE**

(30) Priority: 26.12.2003 JP 2003433113
(71) Applicant: Matsushita Electric Industries Co., Ltd., Kadoma-shi, Osaka 571-8501 (JP)
(72) Inventor: KATAOKA, Mitsuteru c/o Matsushita El. Ind. Co, Ltd, Chuo-Ku, Osaka-shi, Osaka 540-6319 (JP)
(74) Representative: Gassner, Wolfgang
(86) International application number: PCT/JP2004/019229
(87) International publication number: WO 2005/064928

(57) **Abstract**

When detecting the start of a recommended program, a recommended program notification device displays a notification screen (121) indicating the existence of a recommended program. When a recommendation control instruction is input while the notification screen (121) is being displayed, the recommended program notification device displays a recommendation list window (132) indicating a list of recommended programs. When a predetermined time has elapsed, and when an instruction other than the recommendation control instruction is input, while the notification screen (121) is being displayed, the recommended program notification device erases the notification screen (121) . The recommended program notification device may display the notification screen when selected stations are changed. Thereby, a user can obtain information about a recommended program without inputting any instruction.

## Description

### TECHNICAL FIELD

The present invention relates to a method and a device of notifying a user of a recommended program. More particularly, the present invention relates to a recommendedprogramnotification method and a recommended program notification device of notifying of the existence of a recommended program using GUI (Graphical User Interface).

### BACKGROUND ART

With the advent of multi-channel digital television broadcast and the penetration of broad-band communications and the Internet broadcast, the number of contents which a user can view is rapidly increasing. The user obtains an electronic program table (EPG:Electric Program Guide) of digital television broadcast or a list of programs (also referred to as contents) which can be viewed via, for example, a directory service on the Internet, and among them, selects a program which the user actually views. However, since the number of programs which the user can view is recently excessively large, it is considerably difficult for the user to select a program.

As an approach to solve the problem, a method and a device of automatically recommend a program (content) which fits a user' s preference has been proposed. For example, Patent Document 1 describes a method of automatically learning a user's preference based on a history of viewing television broadcasts, and based on the result of the learning, and presenting recommended programs assigned with precedences to the user. Patent Document 2 describes a method of automatically learning a user's preference and recommending a web site which fits the user's preference.

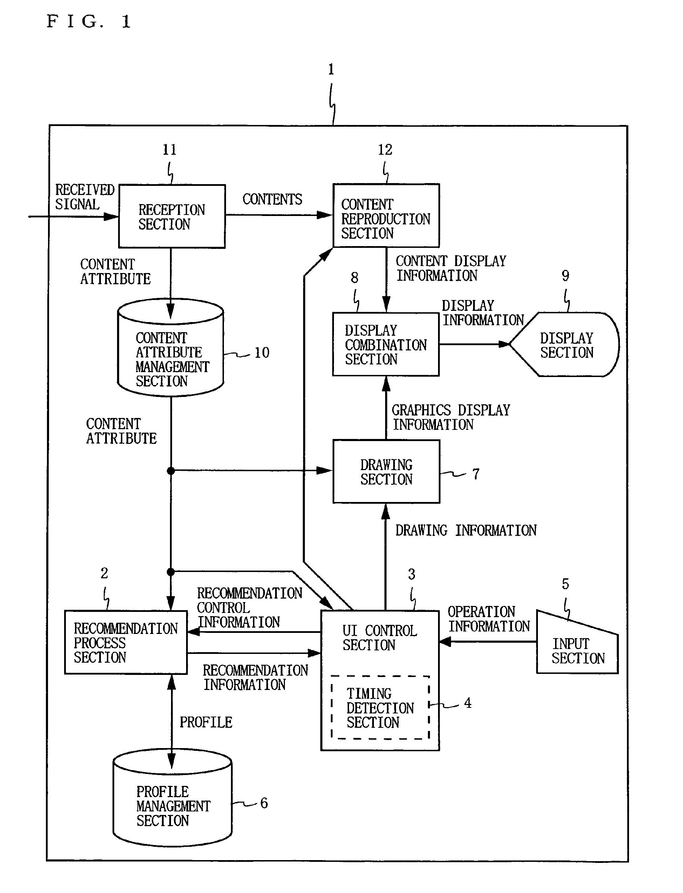

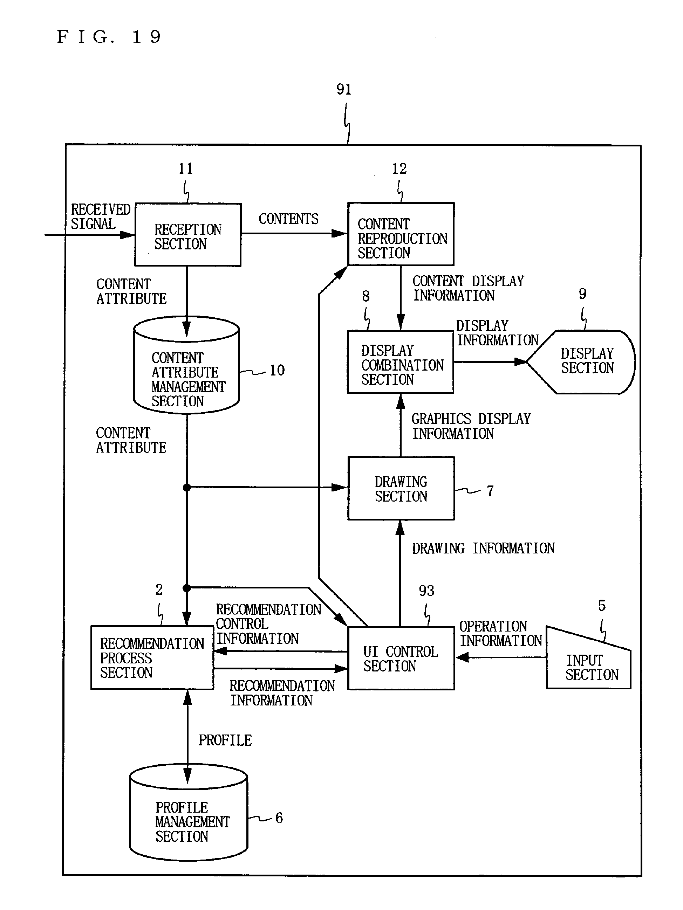

A conventional recommended program presentation device of presenting a program which fits a user' s preference to the user will be described with reference to FIG. 19. The conventional recommended program presentation device 91 of FIG. 19 comprises a recommendation process section 2, an input section 5, a profile management section 6, a drawing section 7, a display combination section 8, a display section 9, a content attribute management section 10, a reception section 11, a content reproduction section 12, and an UI control section 93. Note that the configuration of the recommended program presentation device 91 is similar to that of a recommended program notification device according to the present invention described below (see FIG. 1). Therefore, here, components of FIG. 19 which are the same as those of FIG. 1 are referenced with the same reference numerals and will be only simply described.

The reception section 11 performs an decryption process or an error correction process with respect to a received signal containing a content, and outputs the content and attribute data accompanying the content (hereinafter referred to as content attributes). The content reproduction section 12 decodes the content output from the reception section 11. The content attribute management section 10 stores and manages the content attributes output from the reception section 11. The content attributes include, for example, a broadcast date and a channel of a program, a program genre, an abstract of a content, and the like. The input section 5 is an input means for inputting a user' s instruction. The UI control section 93 is a control section for the whole recommended program presentation device 91. For example, when receiving an instruction from the user via the input section 5, the UI control section 93 changes its internal state to control the recommendation process section 2, the drawing section 7, and the like.

The profile management section 6 stores and manages user's preference information (hereinafter referred to as a profile). The recommendation process section 2 performs a process of obtaining information about a content to be recommended to the user, and a process of updating the profile stored in the profile management section 6, based on the content attributes stored in the content attribute management section 10, in accordance with the UI control section 93. The drawing section 7 generates a bitmap image to be displayed on a screen, in accordance with a control performed by the UI control section 93. The display combination section 8 combines a result of decoding by the content reproduction section 12 and a bitmap image generated by the drawing section 7. The display section 9 displays a result of combination by the display combination section 8.

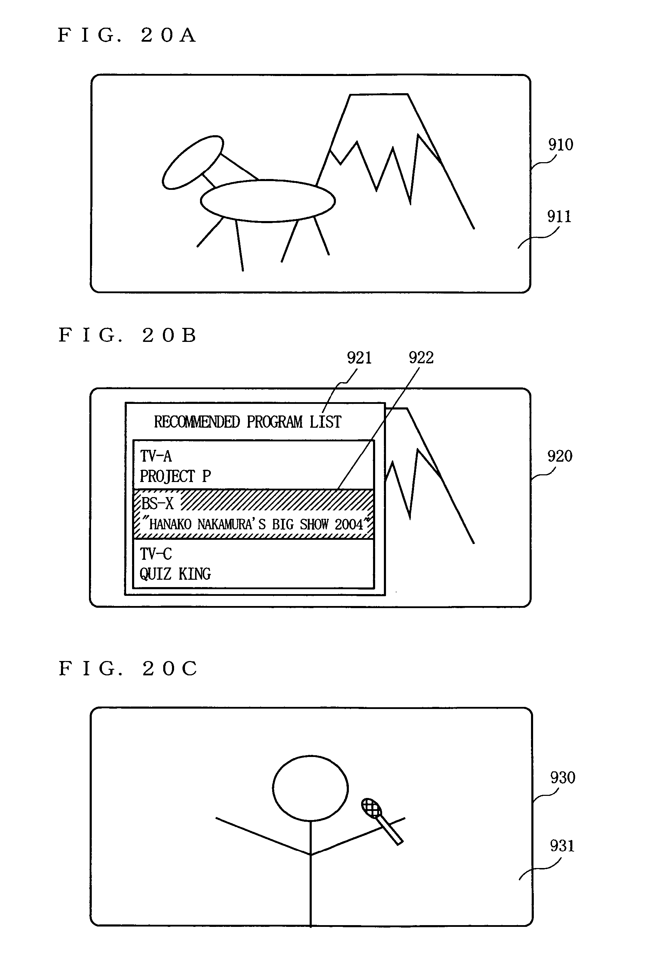

FIGS. 20A to 20C are diagrams illustrating a GUI display in the conventional recommended program presentation device 91. A screen 910 illustrated in FIG. 20A is an initial screen before a recommended program presenting process is performed. On the screen 910, a television broadcast program video 911 is displayed on the full screen.

A screen 920 of FIG. 20B is displayed by the user pressing down a recommended counter program button of the input section 5 while the screen 910 is being displayed. On the screen 920, a window 921 generated by the recommended program presentation device 91 is overlaid and displayed on a television broadcast program video. On the window 921, programs (counter programs) which are currently broadcast on different channels are displayed in order of the level of recommendation to the user, highest first. One of the plurality of programs displayed on the window 921 is marked by a focus 922. When the user presses down an up or down button of the input section 5, the focus 922 is moved to an upper or lower program.

The recommended program presentation device 91 performs the following process in order to display the screen 920 in which the window 921 is overlaid on a program video . When the user presses down the recommended counter program button, the input section 5 outputs operation information indicating such an operation. The UI control section 93 receives the operation information, recommendation control information which provides an instruction to select a recommended program among currentlybroadcast programs, is output to the recommendation process section 2. The recommendation process section 2 receives the recommendation control information, searches content attributes stored in the content attribute management section 10, and reads out currently broadcast programs and their content attributes. Next, the recommendation process section 2 reads out a profile from the profile management section 6, and calculates a fitting level between the content attributes and the profile for each of the currently broadcast programs. Further, the recommendation process section 2 sorts the currently broadcast programs in order of fitting level, highest first, and outputs the result as recommendation information. The UI control section 93 receives the recommendation information, and outputs drawing information for displaying the window 921 to the drawing section 7. Thereby, the display section 9 displays the screen 920 in which the window 921 is overlaid on a program video.

A screen 930 of FIG. 20C is displayed by the user pressing down an enter button of the input section 5 while the screen 920 is being displayed. When the enter button is pressed, a program marked by the focus 922 in the window 921 is displayed on the full screen. Thereby, on the screen 930, a new program video 931 (here, a video of a program "Hanako Nakamura' s Big Show 2004") is displayed on the full screen.

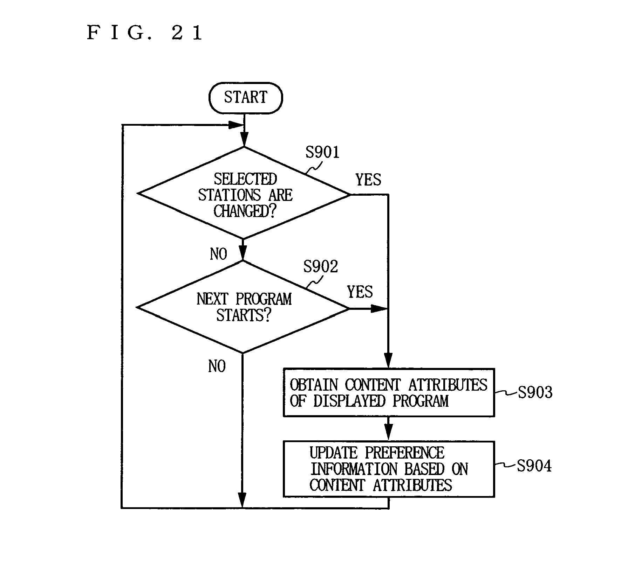

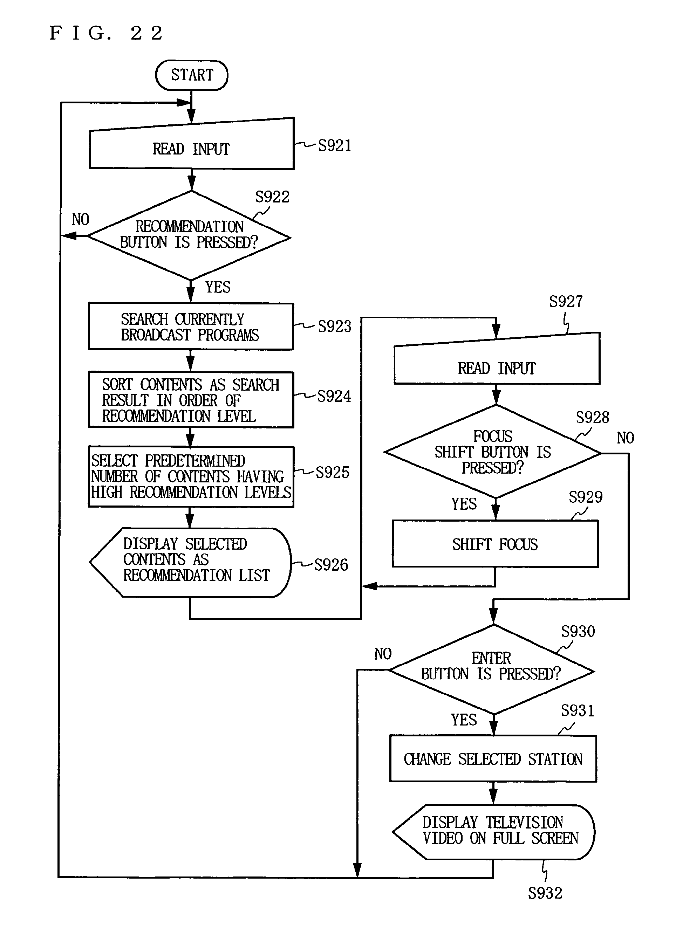

In the conventional recommended program presentation device 91, if roughly divided, a process of learning a user's preference (FIG. 21) and a process of recommending a program (content) based on the user's preference (FIG. 22) are performed. FIG. 21 is a flowchart of a preference learning process performed in the recommended program presentation device 91. In the preference learning process, the following steps are executed.

(Step S901) When selected stations are changed, the control of the recommended program presentation device 91 goes to step S903, and when otherwise, the control of the recommended program presentation device 91 goes to step S902. In this step, when operation information output from the input section 5 indicates changing of selected stations, the UI control section 93 outputs recommendation control information indicating that matter to the recommendation process section 2.

(Step S902) When the next program starts, the control of the recommended program presentation device 91 goes to step S903, and when otherwise, the control of the recommended program presentation device 91 goes to step S901. In this step, the UI control section 93 reads the content attributes of the next program on a currently selected channel from the content attribute management section 10, and compares a program start time contained in the read content attributes with a current time, to determine whether or not the next program starts. When the next program starts, the UI control section 93 outputs recommendation control information indicating that matter to the recommendation process section 2.

(Step S903) The recommended program presentation device 91 obtains the content attributes of a currently displayed program. In this step, the recommendation process section 2 reads out the content attributes of a currently displayed program from the content attribute management section 10, which is triggered by the recommendation control information output from the UI control section 93 in step S901 or S902.

(StepS904) The recommended program presentation device 91 updates preference information in accordance with the content attributes obtained in step S903. In this step, the recommendation process section 2 updates the profile (preference information) stored in the profile management section 6, based on the content attributes obtained in step S903. Any method of updating a profile may be used. For example, as a simple method, statistics information indicating the frequency of the value of each of the obtained content attributes can be used as a profile. After step S904, the control of the recommended program presentation device 91 goes to step S901.

As described above, in the recommended program presentation device 91, the profile is updated when the user changes selected stations and when the program starts. Therefore, all contents which have been viewed by the user are reflected on the profile. Therefore, it is possible to obtain a profile indicating a user's preference.

FIG. 22 is a flowchart of a program recommendation process in the conventional recommended program presentation device 91. In the program recommendation process, the following steps are executed.

(Step S921) The recommended program presentation device 91 reads an input. In this step, the input section 5 outputs operation information corresponding to a user's operation. Note that, even when there is not an input, the control of the recommended program presentation device 91 is assumed to immediately go to the next step (here, step S922) without waiting. Note that going to the next step without waiting is called "non-block" in the field of computer programming.

(Step S922) When a recommendation button is pressed, the control of the recommended program presentation device 91 goes to step S923, and when otherwise, the control of the recommended program presentation device 91 goes to step S921. In this step, the UI control section 93 determines whether or not operation information output from the input section 5 indicates that the recommendation button has been pressed. When the determination performed by the UI control section 93 is positive, the UI control section 93 outputs recommendation control information which provides an instruction to produce a recommendation list, to the recommendation process section 2.

(Step S923) The recommended program presentation device 91 searches currently broadcast programs. In this step, the recommendation process section 2 receives the recommendation control information output from the UI control section 93 in step S922, and searches the content attributes stored in the content attribute management section 10, to obtain a list of currently broadcast programs.

(Step S924) The recommended program presentation device 91 sorts contents included in the result of the search in order of recommendation level, highest first. In this step, for each of the currently broadcast programs obtained in step S923, the recommendation process section 2 compares the content attributes of the program stored in the content attribute management section 10 with the profile stored in the profile management section 6, to obtain the level of recommendation to the user. Thereafter, the recommendation process section 2 sorts the contents included in the search result in order of recommendation level, highest first.

(Step S925) The recommended program presentation device 91 selects a predetermined number of contents having high recommendation levels from the contents included in the search result. In this step, the recommendation process section 2 selects a predetermined number of contents in order of recommendation level, highest first, from the program list sorted instepS924, and outputs a list of the selected contents arranged in order of recommendation level, highest first, as recommendation information to the UI control section 93.

(Step S926) The recommended program presentation device 91 displays the selected contents as a recommendation list. In this step, the UI control section 93 outputs drawing information for displaying the content (program) list contained in the recommendation information output from the recommendation process section 2, to the drawing section 7. Thereby, the display section 9 displays the recommended program list.

(Step S927) The recommended program presentation device 91 reads an input, as in step S921.

(Step S928) When a focus shift button is pressed, the control of the recommended program presentation device 91 goes to step S929, and when otherwise, the control of the recommended program presentation device 91 goes to step S930. In this step, the UI control section 93 determines whether or not operation information output from the input section 5 indicates that the focus shift button has been pressed.

(Step S929) The recommended program presentation device 91 shifts the focus on the screen. In this step, the UI control section 93 outputs drawing information for redrawing the focus displayed on the screen, at a position to which the focus has been shifted in accordance with the pressed focus shift button, to the drawing section 7. After step S929, the control of the recommended program presentation device 91 goes to step S927.

(StepS930) When the enter button is pressed, the control of the recommended program presentation device 91 goes to step S931, and when otherwise, the control of the recommended program presentation device 91 goes to step S921. In this step, the UI control section 93 determines whether or not the operation information input from the input section 5 indicates that the enter button has been pressed.

(Step S931) The recommended program presentation device 91 changes a selected station to a channel which broadcasts a program marked by the focus when the enter button is pressed. In this step, the UI control section 93 outputs, to the content reproduction section 12, a request to select a channel which broadcasts a program marked by the focus when the enter button is pressed. The content reproduction section 12 changes selected stations, which is triggered by the request.

(Step S932) The recommended program presentation device 91 displays a television video on the full screen. In this step, the UI control section 93 removes the drawing information of the drawing section 7. Thereby, the drawing section 7 no longer outputs a bitmap image, and the display section 9 displays only the result of decoding performed by the content reproduction section 12 on the full screen. After step S932, the control of the recommended program presentation device 91 goes to step S921.

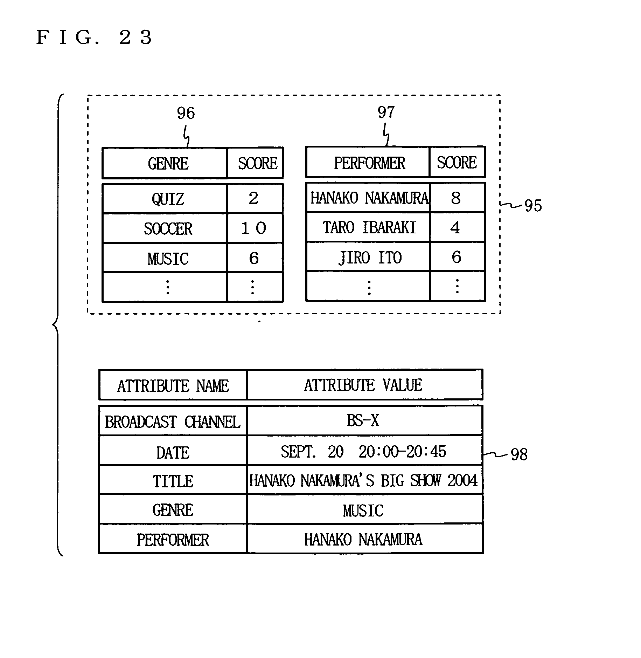

In the conventional recommended program presentation device 91, a data structure illustrated in FIG. 23 is used. In FIG. 23, an exemplary profile 95 stored in the profile management section 6 and exemplary content attributes 98 extracted in the reception section 11 are illustrated. The profile 95 includes data 96 which is in the form of a table indicating a score for each genre and data 97 which is in the form of a table indicating a score for each performer. In the data 96 and 97, items which fit a user's preference are assigned with higher scores. The content attributes 98 include the attribute names and the attribute values of five content attributes (a broadcast channel, a date, a title, a genre, and a performer) for one program.
[Patent Document 1] Japanese Patent Laid-Open Publication No. 9-83891
[Non-Patent Document 1] Hiroshi Kutsumi, et al., "Development of a UserAdaptive Home Page Recommendation Software, 'Web Navigator' ", the IEICE transactions (D-II), Vol. J84-D-II, No. 6, pp. 1149-1157, June, 2001

### DISCLOSURE OF THE INVENTION

### PROBLEMS TO BE SOLVED BY THE INVENTION

The conventional recommended program presentation device 91 has the following problems. Note that an "n-th problem" described below (n is a natural number, the same is true of descriptions below) is solved by an "n-th embodiment" described below.

(First problem) In the conventional recommended program presentation device, in order to use the program recommendation function, the user needs to provide an explicit instruction to use the program recommendation function by, for example, pressing the recommendation button. The user feels trouble with this operation. In addition, when the user concentrates on viewing a program, so that the user forgets to press the recommended counter program button, the user may fail to view a recommended program from the beginning. In addition, if a screen indicating a recommended program occupies a large area in the whole screen, a program video is hidden, so that viewing of the program is obstructed. Particularly, when a plurality of users view the same screen, a screen displaying a recommended program is nothing but an obstruction to viewing the program for users other than a user who wants to receive program recommendation. In addition, the user needs to learn a new operation in order to use the program recommendation function (e. g. , pressing the recommendation button, etc.). Unless the user learns this operation, the user cannot use the program recommendation function.

(Second problem) When the user changes selected stations, there are the case where a selected station is changed to a specific broadcast channel after the next program to be viewed is determined, and the case where programs other than a program on a currently selected broadcast channel are searched for the next program. In the latter case, the user changes selected stations some times to search for a program which fits his/her preference. Therefore, when program recommendation is received after changing selected stations a number of times, the user only receives recommendation of a program which has been known by selecting a series of stations. Therefore, the program recommendation function has a small effect. Therefore, a most effective timing of program recommendation is considered to be after or before selecting a station. However, assuming that the user invariably presses the recommendationbutton before selecting a station, even when there is not an appropriate recommended program, a screen indicating a meaningless recommended program is displayed.

(Third problem) The user may want to display only a program video on the screen. However, when a channel and, in addition, a recommended program are displayed on the screen, the user needs to perform both an operation of ending the channel display and an operation of erasing a screen indicating a recommended program. The user feels trouble with performing these two operations separately.

(Fourth problem) The conventional recommended program presentation device has only two states: a state that information about a recommended program is not displayed; and a state that a screen indicating a recommended program is overlaid and displayed on a program video. Therefore, when a plurality of users view the same screen, either one of the following states inevitably occurs: a state that all members view a program; and all members view information about a recommended program without viewing a program. If the information amount of a recommended program is increased, a program video is more hidden, so that viewing of the program is further obstructed. Conversely, if the information amount of a recommended program is decreased, information for determining whether or not to view a recommended program becomes insufficient, so that the meaning of presenting the information about a recommended program is lost. However, the amount of information about a recommended program which should be displayed varies depending on a user's condition or the contents of a recommended program, and therefore, a necessary and sufficient amount thereof cannot be previously determined.

(Fifth problem) The conventional recommended program presentation device cannot meet a demand of a user who wants to know the existence or nonexistence of a recommended program, but not the contents of the recommended program.

(Sixth problem) Even when receiving presentation of a recommended program, the user does not initiate an action for viewing the recommended program if the user is not motivated to view the program. The user determines whether or not to view a recommended program based on whether or not the program fits his/her preference. The user needs to check various attributes of a program (e.g., a genre, a performer, a program title, program contents, etc.) in order to accurately perform the above-described determination, however, the user feels trouble with the checking. When a program which the user views every week is recommended, the user may not determine whether or not the recommended program fits his/her preference. In addition, when a plurality of users share one recommended program presentation device, and the recommended program presentation device handles the sum of sets of a plurality of pieces of user' s preference information as user' s preference information, a program which does not necessarily fit a currently used user's preference may be recommended. When a program which does not fit a user' s preference is recommended after an effort is expended to check program attributes, the user no longer trusts the program recommendation function.

### SOLUTION TO THE PROBLEMS

To achieve the above objects, the present invention has the following aspects. Note that an "n-th aspect" described below corresponds to the "n-th embodiment" described below.

(First aspect) A recommended program notification device displays a notification screen indicating the existence of a recommended program when detecting the start of a recommended program. When a predetermined time has elapsed since the display of the notification screen, or when an instruction other than a recommendation control instruction is input, the recommended program notification device erases the notification screen.

(Second aspect) The recommended program notification device displays a notification screen indicating the existence of a recommended program when detecting changing of selected stations. When a predetermined time has elapsed since the display of the notification screen, or when an instruction other than a recommendation control instruction is input, the recommended program notification device erases the notification screen.

(Third aspect) The recommended program notification device displays a notification screen indicating the existence of a recommended program when detecting the start of a channel display. When a predetermined time has elapsed since the display of the notification screen, or when an instruction other than a recommendation control instruction is input, the recommended program notification device erases the notification screen. The channel display starts and ends, depending on a channel display control instruction.

(Fourth aspect) The recommended program notification device displays a list screen indicating a list of recommended programs when a recommendation control instruction is input while a notification screen is not being displayed; erases a notification screen and displays a list screen when a recommendation control instruction is input while the notification screen is being displayed; and erases a list screen and displays a video of a recommended program when a recommendation control instruction is input while the list screen is being displayed.

(Fifth aspect) The recommended program notification device displays a list screen indicating a list of recommended programs when a recommendation control instruction is input while a notification screen is not being displayed; erases a notification screen and displays a simple list screen when a recommendation control instruction is input while the notification screen is being displayed; erases a simple list screen and displays a list screen when a recommendation control instruction is input while the simple list screen is being displayed; and erases a list screen and displays a video of a recommended program when a recommendation control instruction is input while the list screen is being displayed.

(Sixth aspect) The recommended program notification device obtains a recommendation reason of a program and displays a notification screen including the obtained recommendation reason. Examples of the recommendation reason include frequent viewing of a program, belonging of a program to a specific genre, appearance of a specific performer in a program, and inclusion of a specific character string in a document accompanying a program.

### EFFECT OF THE INVENTION

The first to sixth aspects of the present invention have the following effects. Note that an "n-th effect" described below corresponds to the "n-th embodiment" described below.

(First effect) When a recommended program starts, a notification screen indicating the existence of the recommended program is automatically displayed. Therefore, the user does not need to input a recommendation control instruction a number of times until a recommended program is found. The notification screen is displayed, interrupting a program video, so that the user does not fail to view the next program even when the user concentrates on viewing the program. In addition, by overlaying and displaying a notification screen including information about a limited number of recommended programs on the program video, it is possible to reduce the area of the notification screen, so that viewing of the program can be prevented from being obstructed. In addition, by including required minimum information for determining whether or not to view a program in the notification screen, the user can determine correctly based on the information. Based on the result of the determination, the user changes selected stations to view the program when the user wants to view the program, and does not change stations when the user does not want to view the program. In the latter case, even when the user does not perform an operation, the recommended program notification device automatically erases the notification screen if a predetermined condition is established. These operations are not troublesome for the user, and the user does not need to learn an operation method of using the program recommendation function.

In addition, by erasing a notification screen immediately when an instruction other than the recommendation control instruction is input as required, viewing of a program is not obstructed by the notification screen. In addition, by presenting a list screen indicating a list of recommended programs, information about the recommended programs, which is sufficient in terms of quantity and quality, can be presented to the user. Thereby, it is possible to satisfy a wide variety of needs and provide necessary and sufficient information by a simple operation for from a user who is not interested in recommendation of a program to a user who wants detailed information about a recommended program.

(Second effect) Since selected stations are not changed while the user is viewing a certain program, a notification screen is not displayed. Therefore, a notification screen does not prevent viewing of a program. On the other hand, when the user changes selected stations in order to view another program, the user can receive program recommendation timely. Since, generally, the user knows a station selection operation well, the user does not need to learn a new operation in order to use the program recommendation function. Further, as in the first effect, it is possible to satisfy a wide variety of needs and provide necessary and sufficient information by a simple operation for from a user who is not interested in recommendation of a program to a user who wants detailed information about a recommended program.

(Third effect) A notification screen is displayed and erased in association with a channel display, so that the user can use the recommended program notification function without knowing an operation method. If a notification screen is automatically erased after a predetermined time has elapsed, the user can erase the notification screen while leaving a channel display without performing any operation. When the user wants to erase a channel display, it is highlypossible that a notification screen is also an obstruction. Therefore, if a notification screen is erased in association with the end of a channel display, the channel display and the notification screen together can be erased without the user learning a new operation.

(Fourth effect) If the user inputs the recommendation control instruction irrespective of the displayed state of a notification screen, the user can use the program recommendation function. By inputting a required number of recommendation control instructions, the information amount of a recommended program can be changed in a stepwise manner. Therefore, the user can perform a correct determination based on necessary and sufficient information for determining whether or not to view a program. In addition, if a notification screen does not include information more than necessary, it is possible to reduce the size of the notification screen, so that viewing of a program can be prevented from being obstructed.

(Fifth effect) By adding a new state before reaching a state that a list screen is displayed, the user can obtain necessary and sufficient information for determining whether or not to view a program, in addition to the fourth effect. An operation of using the program recommendation function is the same as the fourth means and is considerably simple.

(Sixth effect) Since a recommendation reason for a program is displayed, the user can quickly determine whether or not to view the program, based on the displayed recommendation reason. When a conventional recommended program presentation device is used, the user needs to determine whether or not information about a recommended program includes a content in which the user is interested. In contrast to this, according to the recommended program notification device of the present invention, the user does not need to perform the above-described operation. In addition, if a program which does not have an appropriate recommendation reason is not included in a notification screen, further narrowed recommended program candidates can be preferentially presented to the user.

### BRIEF DESCRIPTION OF THE DRAWINGS

[FIG. 1] FIG. 1 is a diagram illustrating a configuration of a recommended program notification device of the present invention which supports digital television broadcast.
[FIG. 2] FIGS. 2A to 2C are diagrams illustrating GUI displays in the recommended program notification device of the first embodiment of the present invention.
[FIG. 3] FIG. 3 is a state transition diagram of the recommended program notification device of the first embodiment of the present invention.
[FIG. 4] FIG. 4 is a flowchart of a notification process of the recommended program notification device of the first embodiment of the present invention.
[FIG. 5] FIGS. 5A to 5C are diagrams illustrating GUI displays in a recommended program notification device according to a second embodiment of the present invention.
[FIG. 6] FIG. 6 is a state transition diagram of the recommended program notification device of the second embodiment of the present invention.
[FIG. 7] FIG. 7 is a flowchart of a notification process of the recommended program notification device of the second embodiment of the present invention.
[FIG. 8] FIGS. 8A to 8D are diagrams illustrating GUI displays in a recommended program notification device according to a third embodiment of the present invention.
[FIG. 9] FIG. 9 is a state transition diagram of the recommended program notification device of the third embodiment of the present invention.
[FIG. 10] FIG. 10 is a flowchart of a notification process of the recommended program notification device of the third embodiment of the present invention.
[FIG. 11] FIGS. 11A to 11C are diagrams illustrating GUI displays in a recommendedprogramnotification device according to a fourth embodiment of the present invention.
[FIG. 12] FIG. 12 is a state transition diagram of the recommended program notification device of the fourth embodiment of the present invention.
[FIG. 13] FIG. 13 is a flowchart of a notification process of the recommended program notification device of the fourth embodiment of the present invention.
[FIG. 14] FIGS. 14A to 14D are diagrams illustrating GUI displays in a recommended program notification device according to a fifth embodiment of the present invention.
[FIG. 15] FIG. 15 is a state transition diagram of the recommended program notification device of the fifth embodiment of the present invention.
[FIG. 16] FIG. 16 is a flowchart of a notification process of the recommended program notification device of the fifth embodiment of the present invention.
[FIG. 17] FIGS. 17A to 17C are diagrams illustrating GUI displays in a recommendedprogramnotification device according to a sixth embodiment of the present invention.
[FIG. 18] FIG. 18 is a flowchart of a notification process of the recommended program notification device of the sixth embodiment of the present invention.
[FIG. 19] FIG. 19 is a diagram illustrating a configuration of a conventional recommended program notification device.
[FIG. 20] FIGS. 20A to 20C are diagrams illustrating GUI displays in the conventional recommended program notification device.
[FIG. 21] FIG. 21 is a flowchart of a preference learning process of the conventional recommended program notification device.
[FIG. 22] FIG. 22 is a flowchart of a program recommendation process of the conventional recommended program notification device.
[FIG. 23] FIG. 23 is a diagram illustrating a data structure of the conventional recommended program notification device.

### DESCRIPTION OF THE REFERENCE CHARACTERS

- 1: recommended program notification device
- 2: recommendation process section
- 3: UI control section
- 4: timing detection section
- 5: input section
- 6: profile management section
- 7: drawing section
- 8: display combination section
- 9: display section
- 10: content attribute management section
- 11: reception section
- 12: content reproduction section

### BEST MODE FOR CARRYING OUT THE INVENTION

Hereinafter, recommended program notification devices according to a first to sixth embodiments of the present invention will be described with reference to the accompanying drawings. In each embodiment, a recommended program notification method and a recommended program notification device of notifying a user of a recommended program, among a plurality of programs (also referred to as contents) broadcast by digital television broadcast. The recommended program notification method and the recommended program notification device described below are characterized by detecting notification timing with which a notification of a recommended program is performed, in the absence of input of a recommendation control instruction, and when notification timing is detected, displaying a notification screen indicating the existence of the recommended program.

Before describing details of the embodiments, a configuration of the recommended program notification devices which is used in common by the embodiments, will be described.
FIG. 1 is a diagram illustrating the configuration of the recommended program notification devices of the embodiments of the present invention. A recommended program notification device 1 of FIG. 1 is one which supports digital television broadcast. The recommended program notification device 1 comprises a recommendation process section 2, an UI control section 3, an input section 5, a profile management section 6, a drawing section 7, a display combination section 8, a display section 9, a content attribute management section 10, a reception section 11, and a content reproduction section 12.

The recommended program notification device 1 receives a signal containing a content from a broadcast station (not shown) . The reception section 11 subjects the received signal to a decryption process and an error correction process to output a content and attribute data (content attributes) accompanying the content. The reception section 11 is, for example, a tuner module for a digital television set, or the like.

The content reproduction section 12 receives the content output from the reception section 11. The content reproduction section 12 decodes the input content and outputs the decoded signal (hereinafter referred to as content display information). For example, when the content is a video/audio signal which is compliant with MPEG-2 (Motion Picture Expert Group-2), the content reproduction section 12 is an MPEG-2 decoder or the like.

The content attribute management section 10 stores and manages the content attributes output from the reception section 11. A content attribute is attribute information which is associated with a corresponding content, including, for example, a method of obtaining the content (a broadcast date and a broadcast channel in digital television broadcast, an URI (Uniform Resource Identifier) on the Internet, etc.), content classification (classification based on a program genre, classification in a search engine, etc.), an abstract of the content, a related key word, billing information, a performer (a character), and the like. The content attribute management section 10 outputs a required portion of the stored content attributes, depending on a request from the recommendation process section 2, the UI control section 3, the drawing section 7, or the like.

The input section 5 is an input means for inputting a user' s instruction. The input section 5 converts a user' s physical operation into operation information which can be processed in the recommended program notification device 1, and outputs the operation information. The input section 5 may be, for example, a remote control device comprising a program table button, a recommendation button, a banner display button, an enter button, up and down buttons, a return button, and the like. In this case, the recommendation button is used to input a recommendation control instruction, and the banner display button is used to input a channel display control instruction. The input section 5 may also be, for example, a pointing device (e. g. , a keyboard, a mouse, etc.), or a combination of a microphone, a speech recognition engine, or the like which can input instructions as with the above-described plurality of buttons. The function of the recommendation button may be achieved by other buttons or the like. For example, when the enter button is pressed or a mouse button is clicked while a specific screen is being displayed, an effect similar to when the recommendation button is pressed may be provided.

The UI control section 3 is a control section for the whole recommended program notification device 1, and performs state transitions of the whole recommended program notification device 1 and manages an interaction process with respect to the user using GUI, and the like. More specifically, the UI control section 3 outputs drawing information (a command to draw characters, graphics, or the like) for constructing a screen image, to the drawing section 7 in order to manage screens displayed on the display section 9, and when a user' s instruction is input from the input section 5, performs changing of screens or a state transition.

The UI control section 3 performs a process of detecting notification timing with which a notification of a recommended program is performed, thereby also serving as a timing detection section 4. The timing detection section 4 is characterized by detecting notification timing with which a notification of a recommended program is performed, when a recommendation control instruction has not been input (specifically, the recommendation button has not been pressed). Also when notification timing is detected, the UI control section 3 performs changing of screens or a state transition. Details of the notification timing detection process of the UI control section 3 will be described below.

The profile management section 6 stores and manages information (profile) indicating a user's preference. The profile management section 6 is, for example, a storage medium, such as a semiconductor memory, a magnetic storage medium, or the like. The recommendation process section 2 receives a signal indicating a process request from the UI control section 3 (hereinafter referred to as recommendation control information), and outputs information about a content to be recommended to the user (hereinafter referred to as recommendation information) based on the content attributes stored in the content attribute management section 10. The recommendation process section 2 is also connected to the profile management section 6, and when generating recommendation information, updates the profile stored in the profile management section 6. The profile is updated based on operation information output from the input section 5, the content attributes of a currently displayed program, or the like.

The drawing section 7 converts the drawing information output from the UI control section 3 into a bitmap image of a screen (hereinafter referred to as graphics display information). The display combination section 8 combines the content display information output from the content reproduction section 12 and the graphics display information output from the drawing section 7 to obtain a bitmap image signal (hereinafter referred to as display information). In this case, the display combination section 8 performs an image combination process called "overlay" with respect to the content display information and the graphics display information. The display section 9 converts the display information obtained in the display combination section 8 into a physical phenomenon which can be recognized by the user, thereby presenting a screen to the user. The display section 9 is, for example, a cathode-ray tube, a liquid crystal panel, or the like of a television set.

Although, in FIG. 1, as an example of the recommended program notification device, the recommended program notification device 1 which supports digital television broadcast has been described, a recommended program notification device which supports digital radio broadcast or data broadcast can be similarly configured. The recommended program notification device can also be applied to: analog broadcast which transmits EPG data using a method (e.g., communications, etc.) different fromthat of video; FM character multiplex broadcast and television character broadcast which transmit data multiplexed with analog broadcast; and the like. The recommended program notification device may also receive a content via communications, but not via broadcast. For example, by changing only the reception section 11, a recommended program notification device can be configured to support broad-band broadcast, video on demand, or content distribution.

### <First embodiment>

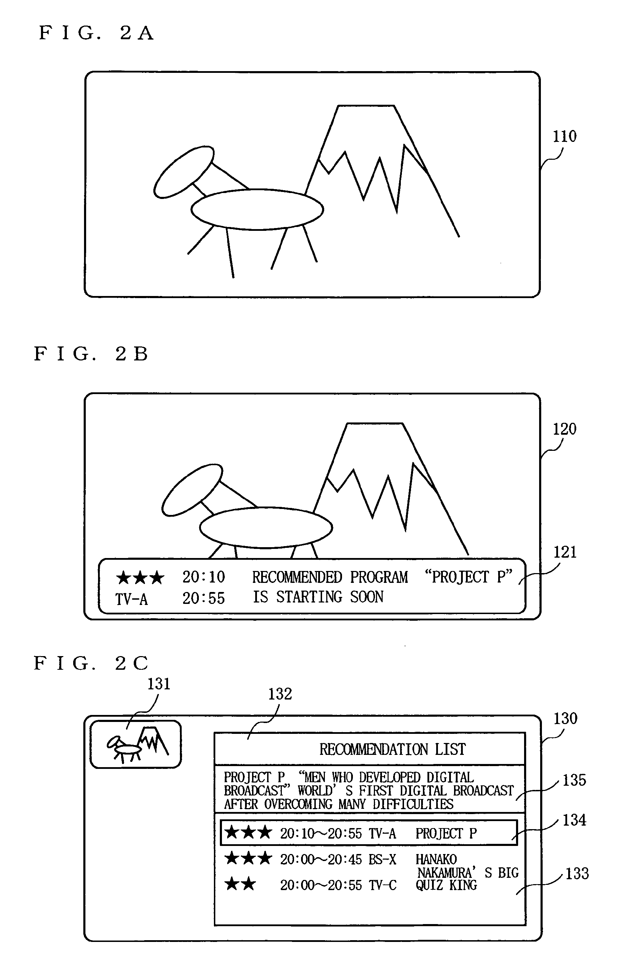

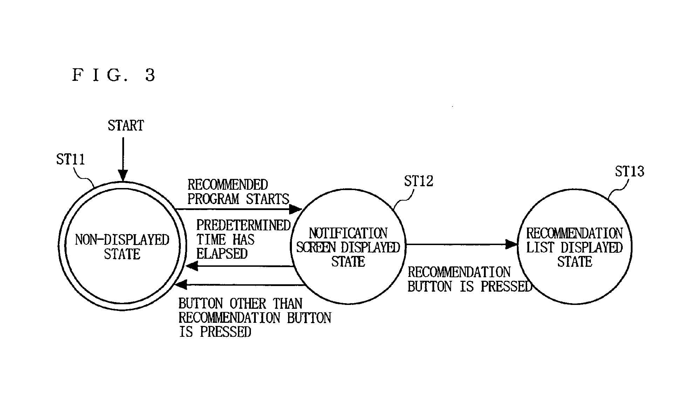

In the first embodiment, a method of automatically displaying a notification screen indicating a recommended program when the recommended program starts, will be described. FIGS. 2A to 2C are diagrams illustrating GUI displays in the recommended program notification device of this embodiment. FIG. 3 is a state transition diagram of the recommended program notification device of this embodiment. As illustrated in FIG. 3, the recommended program notification device of this embodiment performs state transitions between a non-displayed state ST11, a notification screen displayed state ST12, and a recommendation list displayed state ST13. Screens 110, 120, and 130 illustrated in FIGS. 2A to 2C are exemplary screens in the non-displayed state ST11, the notification screen displayed state ST12, and the recommendation list displayed state ST13, respectively.

Here, notation used in the state transition diagram will bedescribed. In the state transition diagram, a circle (including a double circle) indicates one state of the recommended program notification device, and an arrow connecting two circles indicates a state transition. A character string attached to an arrow indicates a condition for occurrence of a state transition corresponding to the arrow. A double circle indicates an initial state (a state immediately after start-up) of the recommended program notification device. Note that, for the sake of understanding of the figures, the end point of an arrow at whose start point a character string "START" is described, is connected to the initial state.

Changing of displayed screens in the recommended program notification device of this embodiment will be described with reference to FIGS. 2A to 2C and 3. In the non-displayed state ST11, as illustrated in FIG. 2A, only a video of a program broadcast on a currently selected broadcast channel (hereinafter referred to as a selected-station program video) is displayed on the full screen 110. On the screen 110, nothing other than the selected-station program video is displayed. In the notification screen displayed state ST12, as illustrated in FIG. 2B, the selected-station program video is displayed on the full screen 120, and is overlaid with a notification screen 121, which is a pop-up window (overlay display). In the recommendation list displayed state ST13, as illustrated in FIG. 2C, the selected-station program video is displayed in a PinP (Picture in Picture) screen 131, and more detailed information about a recommended program is displayed in a recommendation list window 132.

In an initial state, the recommended program notification device is in the non-displayed state ST11, and displays, for example, the screen 110 of FIG. 2A. In the recommended program notification device of this embodiment, the UI control section 3 detects timing with which a recommended program starts, as notification timing with which a notification screen is displayed. More specifically, the UI control section 3 determines a time earlier by a predetermined time (e.g., one minute) than when a recommended program actually starts, as the timing with which the recommended program starts, and is assumed to detect the notification timing when the time comes. When the notification timing is detected (i.e., the recommended program starts) in the non-displayed state ST11, the recommended program notification device goes to the notification screen displayed state ST12.

In the notification screen displayed state ST12, the recommended program notification device displays the screen 120 (FIG. 2B) including, for example, the notification screen 121. The notification screen 121 displays, as various types of information about a recommended program, a recommendation level (represented by the number of stars), a broadcast station name ("TV-A"), a start time (20:10), an end time (20:55), and a title ("Project P") of the program. Note that, in addition to the broadcast station name, information for identifying a broadcast satellite or a communications service via which a broadcast station performs broadcast (hereinafter referred to as a network type) may be displayed as "BS digital" and "FTTH" (abbreviation of Fiber To The Home), for example.

The user knows the existence of a recommended program by the notification screen 121 while viewing a selected-station program video. When the user is interested in the recommended program displayed in the notification screen 121, the user presses the recommendation button of the input section 5 to obtain more detailed information about the recommended program. When the recommendation button is pressed in the notification screen displayed state ST12, the recommended program notification device goes to the recommendation list displayed state ST13. When a button other than the recommendation button is pressed, the recommended program notification device goes to the non-displayed state ST11. Note that, when the enter button is pressed in the notification screen displayed state ST12, the recommended program notification device may display a video of the recommended program, or detailed information for the recommended program (hereinafter referred to as a program content) on the full screen.

In the recommendation list displayed state ST13, the recommended program notification device displays the screen 130 (FIG. 2C) including, for example, the PinP screen 131 and the recommendation list window 132. The recommendation list window 132 includes a list display area 133 and an information display area 135. In the list display area 133, information about recommended programs which are broadcast at the current time is displayed as a list. Each recommended program is associated with one row in the list display area 133, and on each row, the recommendation level, start time, end time, broadcast station name, title, and the like of the program are displayed. One row in the list display area 133 (corresponding to one program) is marked by a focus 134. In the information display area 135, detailed information about the program marked by the focus 134 is displayed. Note that the recommended program notification device may display a network type in addition to the contents of the screen 130 of FIG. 2C.

The user can know detailed information about each program by shifting the focus 134 upward or downward in the list display area 133 using the up and down buttons of the input section 5. The user presses the enter button of the input section 5 while a program which the user wants to view is being marked by the focus 134. When the enter button is pressed, the recommended program notification device displays a video of the program marked by the focus 134. Alternatively, when the enter button is pressed, the recommended program notification device may display the program contents of the program marked by the focus 134 on the full screen.

On the other hand, when the recommendation button is not pressed in the notification screen displayed state ST12, the recommended program notification device goes to the non-displayed state ST11, and displays, for example, the screen 110 of FIG. 2A again. Note that, here, the case where the recommendation button is not pressed, includes the case where a predetermined time (e. g. , 30 seconds) has elapsed without the user pressing any button, and the case where the user presses a button other than the recommendation button. In the former case, the reason why the recommended program notification device goes to the non-displayed state ST11 is that, even when the user ignores the notification screen 121, the notification screen 121 is automatically erased by a time-out process. In the latter case, the reason why the recommended program notification device goes to the non-displayed state ST11 is that the notification screen 121 is erased when the user determines that the display of the notification screen 121 is an obstruction, and provides an explicit instruction to erase the notification screen 121 (e.g. , the return button is pressed), or when the user wants to call another function, and provides an implicit instruction to erase the notification screen 121 (e.g., the program table button is pressed).

Note that, when the enter button or the like is pressed in the notification screen displayed state ST12, the recommended program notification device may immediately display a video of the recommended program displayed in the notification screen 121. Alternatively, in the notification screen displayed state ST12, the recommended program notification device may display the selected-station program video on a sub-screen as a PinP screen, or change the aspect ratio (a ratio of the length to the width) of the selected-station program video to produce an empty area on the displayed screen, and provide the notification screen 121 in the empty area instead of overlaying and displaying the notification screen 121 (pop-up window) on the selected-station program video. Alternatively, the recommended program notification device may provide the notification screen 121 in an area which occurs due to a mismatch between the aspect ratio of the selected-station program video and the aspect ratio of the display section 9. Alternatively, the recommended program notification device may comprise a second display section which is different from the display section 9, and display the notification screen 121 on the second display section. For example, as the second display section, a remote control device having a display function can be used.

When there are a plurality of recommended programs in the notification screen displayed state ST12, the recommended program notification device may simultaneously display information about all recommended programs on the notification screen 121. Alternatively, the recommended program notification device may display information about a portion of the recommended programs on the notification screen 121, and when the user presses the up or down button, may vertically switch recommended programs to be displayed. Alternatively, when information about one recommended program is displayed on the notification screen 121 and the user presses the recommendation button, the recommended program notification device may switch a recommended program to be displayed to the next program until the last recommended program appears. In the notification screen 121, the program recommendation level is represented by the number of stars. Instead of this, the program recommendation level may be represented by a color, a sentence, a bar graph, the speed of animation, or the like.

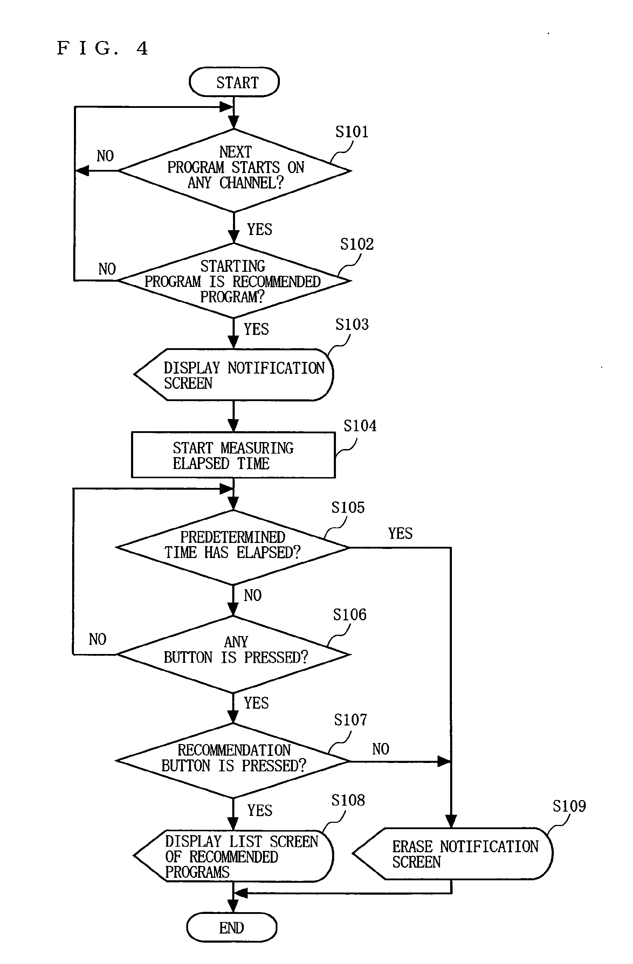

FIG. 4 is a flowchart of a notification process of the recommended program notification device of this embodiment. Among steps illustrated in FIG. 4, steps S101, S102, and S109 correspond to the non-displayed state ST11, steps S103 to S107 correspond to the notification screen displayed state ST12, and step S108 corresponds to the recommendation list displayed state ST13.

(Step S101) When the next program starts on any channel which currently performs broadcast, the control of the recommended program notification device goes to step S102, and when otherwise, the control of the recommended program notification device goes to step S101. In this step, the UI control section 3 reads out the content attributes of the next program on each channel which currently performs broadcast from the content attribute management section 10, and compares the program start time contained in the read content attributes with the current time, to determine whether or not the current time is earlier by a predetermined time (e.g., one minute) than the start time of the next program. When the result of the determination is positive, the UI control section 3 outputs recommendation control information containing the next starting programs to the recommendation process section 2.

(Step S102) When the starting program is a recommended program, the control of the recommended program notification device goes to step S103, and when otherwise, the control of the recommended program notification device goes to step S101. In this step, the recommendation process section 2 reads out the content attributes of the next starting programs from the content attribute management section 10, and using these content attributes, searches the next starting programs for a program which fits a profile (information indicating a user's preference) accumulated in the profile management section 6. As a result of the search, an obtained program becomes a recommended program. The recommendation process section 2 notifies the UI control section 3 of the obtained recommended program as recommendation information.

(Step S103) The recommended program notification device displays a notification screen indicating a program which has been determined that should be recommended in step S102. In this step, the UI control section 3 outputs drawing information for displaying a notification screen including information about the recommended program, based on recommendation information received by the recommendation process section 2. Thereby, the display section 9 displays the screen 120 including the notification screen 121 as illustrated in, for example, FIG. 2B.

As described above, after step S101 of detecting the start of the next program and step S102 of determining whether or not the next starting program is a recommended program are executed, a notification screen including information about the recommended program is displayed in step S103. Therefore, a notification screen is displayed only when the next starting program is a recommended program.

(Step S104) The recommended program notification device starts measuring an elapsed time. In this step, the UI control section 3 internally records a time at which the control of the recommended program notification device goes to step S104.

(Step S105) When a predetermined time has elapsed, the control of the recommended program notification device goes to step S109, and when otherwise, the control of the recommended program notification device goes to step S106. In this step, the UI control section 3 obtains a difference between the time recorded in step S104 and the current time as an elapsed time, and determines whether or not the elapsed time exceeds a predetermined time (e. g. , 30 seconds).

(Step S106) When any button is pressed, the control of the recommended program notification device goes to step S107, and when otherwise, the control of the recommended program notification device goes to step S105. In this step, the UI control section 3 determines whether or not any button is pressed, based on operation information output from the input section 5.

(Step S107) When the button which is determined in step S106 that has been pressed is the recommendation button, the control of the recommended program notification device goes to step S108, and when otherwise, the control of the recommended program notification device goes to step S109.

(Step S108) The recommended program notification device displays a screen indicating a list of recommended programs. In this step, the UI control section 3 outputs drawing information for displaying a list screen indicating a list of recommended programs, based on the recommendation information received from the recommendation process section 2. Thereby, as illustrated in FIG. 2, the display section 9 displays the screen 130 including the list screen indicating the list of recommended programs.

(Step S109) The recommended program notification device erases a notification screen. In this step, the UI control section 3 deletes drawing information about the notification screen 121. The notification process of this embodiment is ended after execution of step S108 or S109.

As described above, when the recommendation button is pressed while a notification screen is being displayed, a list screen indicating a list of recommended programs is displayed in step S108. When a button other than the recommendation button is pressed or a predetermined time has elapsed without any button being pressed while a notification screen is being displayed, the notification screen is erased in step S109.

As described above, according to the recommended program notification device of this embodiment, when a recommended program starts, a notification screen indicating the existence of the recommended program is automatically displayed, interrupting a program video. Therefore, the user can recognize the existence of the recommended program without performing a particular operation. In addition, by overlaying and displaying a small notification screen including required minimum information on a program video, viewing of a program is prevented from being obstructed, and the user is allowed to select an appropriate program.

### <Second embodiment>

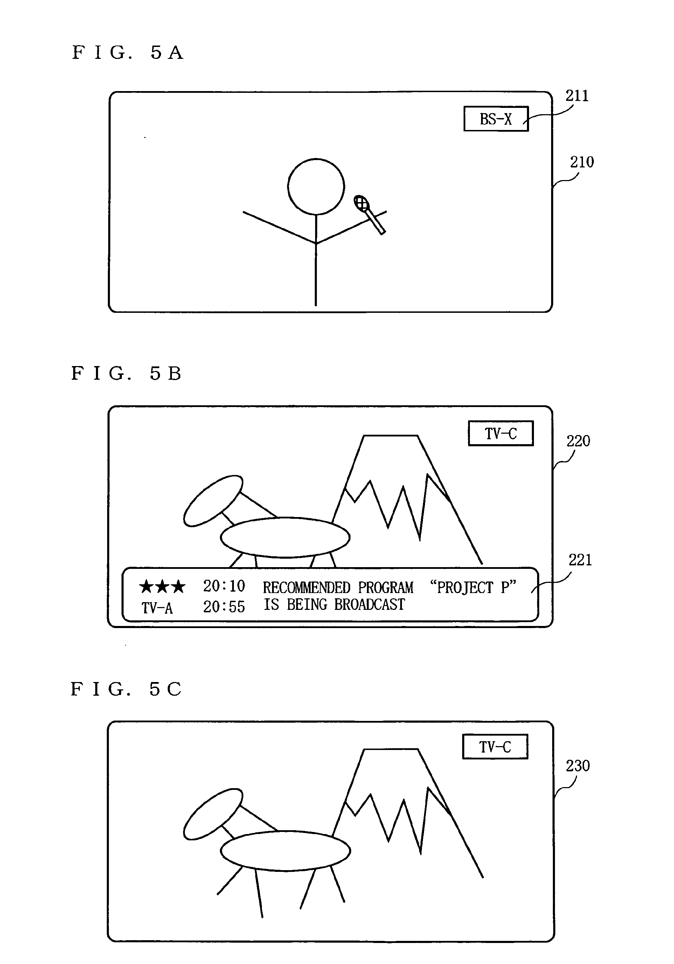

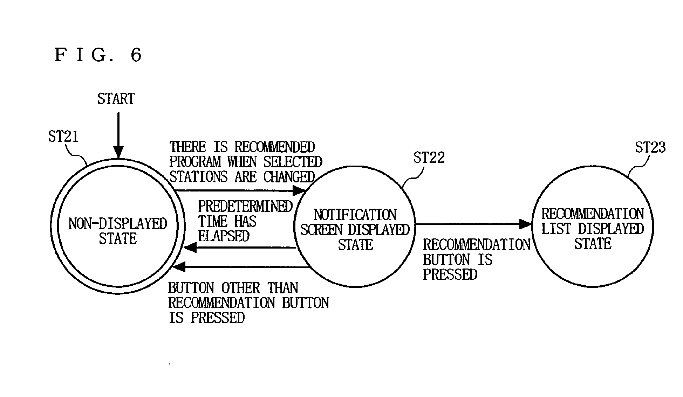

In the second embodiment, a method of automatically displaying a notification screen indicating a recommended program when selected stations are changed, will be described. FIGS. 5A to 5C are diagrams illustrating GUI displays in a recommended program notification device of this embodiment. FIG. 6 is a state transition diagram of the recommended program notification device of this embodiment. As illustrated in FIG. 6, the recommended program notification device of this embodiment performs state transitions between a non-displayed state ST21, a notification screen displayed state ST22, and a recommendation list displayed state ST23. Screens 210 and 220 of FIGS. 5A and 5B are exemplary screens in the non-displayed state ST21 and the notification screen displayed state ST22, respectively. The screen 230 of FIG. 5C is an exemplary screen in the non-displayed state ST21 after the screen 220 is displayed.

Changing of displayed screens in the recommended program notification device of this embodiment will be described with reference to FIGS. 5A to 5C and 6. In the non-displayed state ST21, as illustrated in FIGS. 5A and 5C, selected-station program videos are displayed on the full screens 210 and 230. In the notification screen displayed state ST22, as illustrated in FIG. 5B, a selected-station program video is displayed on the full screen 220, which is overlaid with a notification screen 221 (pop-up window). In the recommendation list displayed state ST23, as is the same as the screen 130 of FIG. 2C, a list screen indicating a list of recommended programs is displayed.

On the screens 210, 220, and 230, a channel display 211 for identifying the broadcast channel of a selected station is displayed. When selected stations are changed, the channel display 211 is changed to a content corresponding to the broadcast channel of a selected station after the changing. The UI control section 3 outputs drawing information for performing a channel display. Thereby, the display section 9 displays a screen including the channel display. Note that the channel display included in the screens 210, 220, and 230 includes only a broadcast channel name, and the channel display may include a channel number, a networktype (groundwave, BS (Broadcast Satellite), FTTH, etc.), a title, or the like.

In an initial state, the recommended program notification device is in the non-displayed state ST21, and displays, for example, the screen 210 of FIG. 5A. In the recommended program notification device of this embodiment, the UI control section 3 detects timing with which selected stations are changed as notification timing with which a notification screen is displayed. More specifically, the UI control section 3 is assumed to detect the notification timing if a recommended program is present when the user changes selected stations using the input section 5. When detecting the notification timing in the non-displayed state ST21 (i.e., a recommended program is present when selected stations are changed), the recommended program notification device goesto the notification screen displayed state ST22.

Operations of the recommended program notification device of this embodiment in the notification screen displayed state ST22 and the recommendation list displayed state ST23 are the same as those of the notification screen displayed state ST12 and the recommendation list displayed state ST13 of the recommended program notification device of the first embodiment, respectively. The recommended program notification device displays the screen 220 (FIG. 5B) including, for example, the notification screen 221 in the notification screen displayed state ST22, and displays a list screen indicating a list of recommended programs, which is the same as the screen 130 of FIG. 2C, in the recommendation list displayed state ST23.

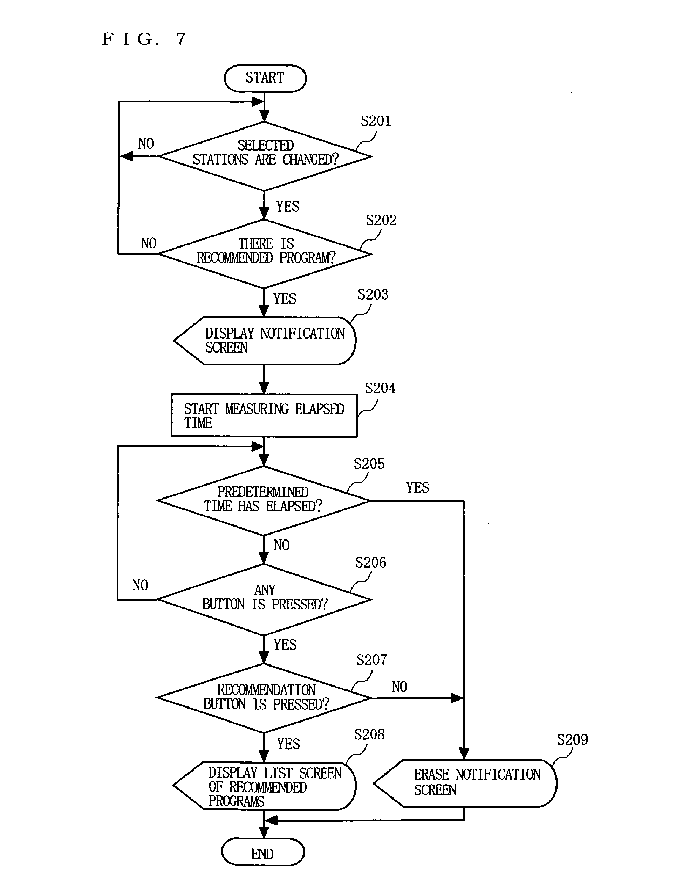

FIG. 7 is a flowchart of a notification process of the recommended program notification device of this embodiment. Among steps illustrated in FIG. 7, steps S201, S202, and S209 correspond to the non-displayed state ST21, steps S203 to S207 correspond to the notification screen displayed state ST22, and step S208 corresponds to the recommendation list displayed state ST23. Steps S203 to S209 are the same as steps S103 to S109 (FIG. 4) and will not be here described.

(Step S201) When selected stations are changed, the control of the recommended program notification device goes to step S202, and when otherwise, the control of the recommended program notification device goes to step S201. In this step, when operation information output from the input section 5 indicates changing of selected stations, the UI control section 3 outputs recommendation information indicating that matter to the recommendation process section 2.

(Step S202) When there is a recommended program at that time, the control of the recommended program notification device goes to step S203, and when otherwise, the control of the recommended program notification device goes to step S201. In this step, the recommendation process section 2 reads out the content attributes of currently broadcast programs from the content attribute management section 10, and using these content attributes, searches the currently broadcast programs for a program which fits a profile accumulated in the profile management section 6. The recommendation process section 2 notifies the UI control section 3 of the obtained recommended program as recommendation information.

As described above, after executing step S201 of detecting changing of selected stations by the user, and step S202 of determining whether or not there is a recommended program after changing of selected stations, a notification screen including information about the recommended program is displayed in step S203. Therefore, a notification screen is displayed only when selected stations are changed and there is a recommended program.

Note that, as has been described so far, the recommended program notification device displays a notification screen only if there is a recommended program when selected stations are changed. The timing of displaying a notification screen is not limited to this. For example, the recommended program notification device may display a notification screen when power is turned on or an access to the Internet is ended. Alternatively, the recommended program notification device has a function of validating or invalidating the recommended program notification function, and may display a notification screen when the setting of the recommended program notification function is switched from invalid to valid. Even assuming that there is a recommended program when selected stations are changed, if a station selecting button or other buttons are once pressed in the notification screen displayed state ST22, the recommended program notification device may not determine that there is a recommended program, in step S202.

As described above, according to the recommended program notification device of this embodiment, when selected stations are changed, a notification screen indicating the existence of a recommended program is automatically displayed, interrupting a program video. Therefore, the user can recognize the existence of a recommended program without performing a particular operation, i. e. , an effect similar to that of the first embodiment is obtained.

### <Third embodiment>

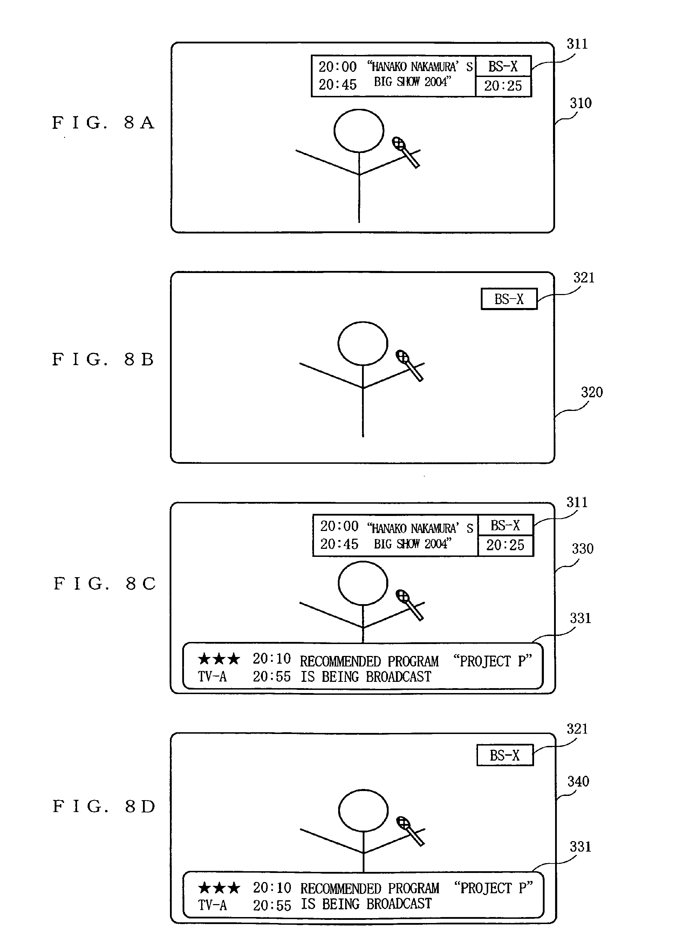

In the third embodiment, a method of controlling a displayed state of a notification screen indicating a recommended program, corresponding to the start and end of a channel display, will be described. The channel display refers to a screen display including information (e.g., a broadcast station name) for identifying a currently selected broadcast channel. For example, the channel display 211 of FIG. 5A and a detailed channel banner 311 illustrated in FIG. 8A are exemplary channel displays described in this embodiment.

FIGS. 8A to 8D are diagrams illustrating GUI displays in the recommended program notification device of this embodiment.

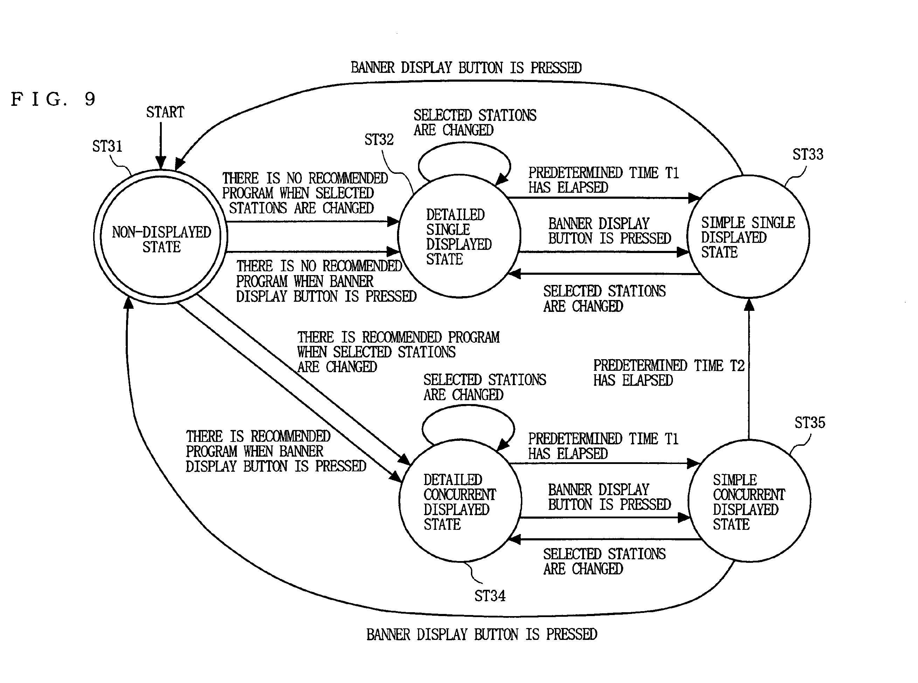

FIG. 9 is a state transition diagram of the recommended program notification device of this embodiment. As illustrated in FIG. 9, the recommended program notification device of this embodiment performs state transitions between a non-displayed state ST31, a detailed single displayed state ST32, a simple single displayed state ST33, a detailed concurrent displayed state ST34, andasimple concurrent displayed state ST35. Screens 310, 320, 330, and 340 illustrated in FIGS. 8A to 8D are exemplary screens in the detailed single displayed state ST32, the simple single displayed state ST33, the detailed concurrent displayed state ST34, and the simple concurrent displayed state ST35, respectively.

Changing of displayed screens in the recommended program notification device of this embodiment will be described with reference to FIGS. 8A to 8D and 9. In the non-displayed state ST31, as is the same as the screen 110 of FIG. 2A, only a selected-station program video is displayed on the full screen. In the detailed single displayed state ST32, as illustrated in FIG. 8A, a selected-station program video is displayed on the full screen 310, which is overlaid with the detailed channel banner 311. In the simple single displayed state ST33, as illustrated in FIG. 8B, a selected-station program video is displayed on the full screen 320, which is overlaid with a simple channel banner 321. In the detailed concurrent displayed state ST34, as illustrated in FIG. 8C, a selected-station program video is displayed on the full screen 330, which is overlaid with the detailed channel banner 311 and a notification screen 331. In the simple concurrent displayed state ST35, as illustrated in FIG. 8D, a selected-station program video is displayed on the full screen 340, which is overlaid with the simple channel banner 321 and the notification screen 331.

The detailed channel banner 311 includes detailed information about a program which is being broadcast on a currently selected broadcast channel. For example, the detailed channel banner 311 of FIGS. 8A and 8C includes the start time, end time, title, and broadcast channel of the program, and a current time. Note that the detailed channel banner 311 may include a network type in addition to these elements. The detailed channel banner 311 is overlaid and displayed, typically as a pop-up window, on a selected-station program video. Note that a display position and size of the detailed channel banner 311, or the contents of information included in the detailed channel banner 311 may be other than those of FIGS. 8A and 8C.

The simple channel banner 321 includes information about the program which is being broadcast on the currently selected broadcast channel, the amount of which is smaller than that of the detailed channel banner 311. For example, the simple channel banner 321 of FIGS. 8B and 8D includes only the name of the currently selected broadcast channel. Note that the simple channel banner 321 may display the name of a broadcast channel using an icon created in a manner which allows the user to identify the channel number, the broadcast channel, and the network type, but not using a character string.

The simple channel banner 321 is displayed so that the user identifies a currently selected broadcast channel, as with the detailed channel banner 311. Note that the simple channel banner 321 includes information (e.g., required minimum information for identifying a broadcast channel), the amount of which is smaller than that of the detailed channel banner 311. Therefore, the area on a displayed screen of the simple channel banner 321 is smaller than that of the detailed channel banner 311, so that viewing of a program is less obstructed as compared to the detailed channel banner 311. Note that the simple channel banner 321 may be assumed to include information having an amount which is equal to or larger than that of the detailed channel banner 311, so that the area on a screen of the detailed channel banner 311 is reduced by reducing the font size of characters included in the detailed channel banner 311, or using a scroll function to limit a portion simultaneously displayed, without substantially reducing the information amount.

In an initial state, the recommended program notification device is in the non-displayed state ST31, and displays only a selected-station program video, as with, for example, the screen 110 illustrated in FIG. 2A. In the non-displayed state ST31, when selected stations are changed, and when the banner display button is pressed (hereinafter the two cases are collectively referred to as "when a predetermined operation is performed"), the recommended program notification device performs a state transition. More specifically, if there is not a recommended program when a predetermined operation is performed in the non-displayed state ST31, the recommended program notification device goes to the detailed single displayed state ST32. In contrast to this, if there is a recommended program when a predetermined operation is performed in the non-displayed state ST31, the recommended program notification device goes to the detailed concurrent displayed state ST34.

In the detailed single displayed state ST32, the recommended program notification device displays, for example, the screen 310 (FIG. 8A) including the detailed channel banner 311. In the detailed single displayed state ST32, the recommended program notification device calculates an elapsed time since the transition to this state. When the elapsed time exceeds a predetermined time t1 (e.g., 15 seconds), the recommended program notification device goes to the simple single displayed state ST33. Also when the banner display button is pressed in the detailed single displayed state ST32, the recommended program notification device goes to the simple single displayed state ST33. When selected stations are changed in the detailed single displayed state ST32, the recommended program notification device resets the elapsed time to be zero, and thereafter, continues to be in the detailed single displayed state ST32.

In the simple single displayed state ST33, the recommended program notification device displays, for example, the screen 320 including the simple channel banner 321 (FIG. 8B) . When selected stations are changed in the simple single displayed state ST33, the recommended program notification device goes to the detailed single displayed state ST32. When the banner display button is pressed in the simple single displayed state ST33, the recommended program notification device goes to the non-displayed state ST31.

In the detailed concurrent displayed state ST34, the recommended program notification device displays, for example, the screen 330 including the detailed channel banner 311 and the notification screen 331 (FIG. 8C). In the detailed concurrent displayed state ST34, the recommended program notification device calculates an elapsed time since the transition to this state. When the elapsed time exceeds the predetermined time t1, the recommended program notification device goes to the simple concurrent displayed state ST35. Also when the banner display button is pressed in the detailed concurrent displayed state ST34, the recommended program notification device goes to the simple concurrent displayed state ST35. When selected stations are changed in the detailed concurrent displayed state ST34, the recommended program notification device resets the elapsed time to be zero, and continues to be in the detailed concurrent displayed state ST34. Note that, when the enter button is pressed in the detailed concurrent displayed state ST34, the recommended program notification device may display a video of a recommended program or a program content about the recommended program on the full screen.

In the simple concurrent displayed state ST35, the recommended program notification device displays, for example, the screen 340 including the simple channel banner 321 and the notification screen 331 (FIG. 8D). In the simple concurrent displayed state ST35, the recommended program notification device calculates an elapsed time since the transition to this state. When the elapsed time exceeds a predetermined time t2 (e.g., 30 seconds), the recommended program notification device goes to the simple single displayed state ST33. When selected stations are changed in the simple concurrent displayed state ST35, the recommended program notification device goes to the detailed concurrent displayed state ST34. When the banner display button is pressed in the simple concurrent displayed state ST35, the recommended program notification device goes to the non-displayed state ST31. Note that, when the enter button is pressed in the simple concurrent displayed state ST35, the recommended program notification device may display a video of a recommended program or a program content about the recommended program on the full screen.

As described above, if there is not a recommended program when a predetermined operation is performed in the non-displayed state ST31, the recommended program notification device goes to the detailed single displayed state ST32. Thereafter, if the user does not perform any operation, the recommended program notification device goes to the simple single displayed state ST33 by a time-out process. Thereby, the displayed screen is changed from the screen 310 (FIG. 8A) to the screen 320 (FIG. 8B). If there is a recommended program when a predetermined operation is performed in the non-displayed state ST31, the recommended program notification device goes to the detailed concurrent displayed state ST34. Thereafter, if the user does not perform any operation, the recommended program notification device goes to the simple single displayed state ST33 via the simple concurrent displayed state ST35 by a time-out process. Thereby, the displayed screen is changed from the screen 330 (FIG. 8C) via the screen 340 (FIG. 8D) to the screen 320 (FIG. 8B).

Regarding the displayed states of the channel banner, the five states of FIG. 9 are divided into: a first state in which a channel banner is not displayed (the non-displayed state ST31) ; a second state in which the detailed channel banner 311 is displayed (the detailed single displayed state ST32 and the detailed concurrent displayed state ST34) ; and a third state in which the simple channel banner 321 is displayed (the simple single displayed state ST33 and the simple concurrent displayed state ST35). Every time the banner display button is pressed, the recommended program notification device goes from the first state to the second state, from the second state to the third state, or from the third state to the first state. Therefore, the user can select a channel banner displayed state most suitable to a current viewing state among the first to third states by pressing the banner display button no more than two times.

Note that, also in the simple concurrent displayed state ST35, the recommended program notification device calculates an elapsed time since the transition to this state, and when a predetermined time has elapsed, may go to the non-displayed state ST31.

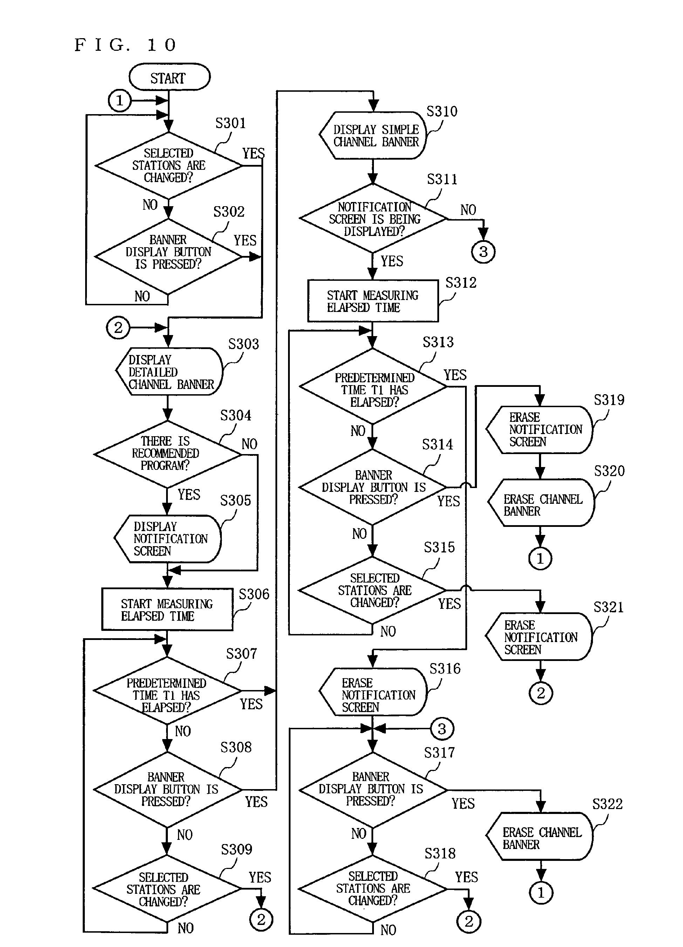

FIG. 10 is a flowchart of a notification process of the recommended program notification device of this embodiment. Among steps illustrated in FIG. 10, steps S301, S302, and S319 to S322 correspond to the non-displayed state ST31, steps S303 to S309 correspond to the detailed single displayed state ST32 or the detailed concurrent displayed state ST34, steps S310 and S311 correspond to the simple single displayed state ST33 or the simple concurrent displayed state ST35, steps S312 to S313 correspond to the simple concurrent displayed state ST35, and steps S316 to S318 correspond to the simple single displayed state ST33.

(Step S301) As in step S201, when selected stations are changed, the control of the recommended program notification device goes to step S303, and when otherwise, the control of the recommended program notification device goes to step S302.

(Step S302) When the banner display button is pressed, the control of the recommended program notification device goes to step S303, and when otherwise, the control of the recommended program notification device goes to step S301. In this step, the UI control section 3 determines whether or not the banner display button is pressed, based on operation information output from the input section 5.

(Step S303) The recommended program notification device displays the detailed channel banner 311. In this step, the UI control section 3 outputs drawing information for displaying the detailed channel banner 311. Thereby, as illustrated in FIGS. 8A and 8C, the display section 9 displays the screens 310 and 330 including the detailed channel banner 311.

(Step S304) As in step S202, when there is a recommended program at that time, the control of the recommended program notification device goes to step S305, and when otherwise, the control of the recommended program notification device goes to step S306.

(Step S305) As in step S103, the recommended program notification device displays a notification screen indicating a program which it has been determined in step S304 that should be recommended.

(Step S306) As in step S104, the recommended program notification device starts measuring an elapsed time.

(Step S307) When the predetermined time t1 has elapsed (i.e., the elapsed time exceeds the predetermined time t1), the control of the recommended program notification device goes to step S310, and when otherwise, the control of the recommended program notification device goes to step S308.

(Step S308) As in step S302, when the banner display button is pressed, the control of the recommended program notification device goes to step S310, and when otherwise, the control of the recommended program notification device goes to step S309.

(Step S309) As in step S201, when selected stations are changed, the control of the recommendedprogramnotification device goes to step S303, andwhen otherwise, the control of the recommended program notification device goes to step S307.

(Step S310) The recommended program notification device displays the simple channel banner 321. In this step, the UI control section 3 outputs drawing information for displaying the simple channel banner 321. Thereby, as illustrated in FIGS. 8B and 8D, the display section 9 displays the screens 320 and 340 including the simple channel banner 321.

(Step S311) When a notification screen is displayed at this time, the control of the recommended program notification device goes to step S312, and when otherwise, the control of the recommended program notification device goes to step S317.

(Step S312) As in step S104, the recommended program notification device starts measuring an elapsed time.

(Step S313) When the predetermined time t2 has elapsed (i.e., the elapsed time exceeds the predetermined time t2), the control of the recommended program notification device goes to step S316, and when otherwise, the control of the recommended program notification device goes to step S314.

(Step S314) As in step S302, when the banner display button is pressed, the control of the recommended program notification device goes to step S319, and when otherwise, the control of the recommended program notification device goes to step S315.

(Step S315) As in step S201, when selected stations are changed, the control of the recommended program notification device goes to step S321, and when otherwise, the control of the recommended program notification device goes to step S313.

(Step S316) As in step S109, the recommended program notification device erases a notification screen.

(Step S317) As in step S302, when the banner display button is pressed, the control of the recommended program notification device goes to step S322, and when otherwise, the control of the recommended program notification device goes to step S318.

(Step S318) As in step S201, when selected stations are changed, the control of the recommendedprogramnotification device goes to step S303, andwhen otherwise, the control of the recommended program notification device goes to step S317.

(Step S319) As in step S109, the recommended program notification device erases a notification screen.

(Step S320) The recommended program notification device erases a channel banner. In this step, the UI control section 3 deletes drawing information about the channel banner. Note that, at the time when the control of the recommended programnotification device reaches this step, the detailed channel banner 311 may be displayed, the simple channel banner 321 may be displayed, or none of these channel banners may be displayed. In this step, when any of the channel banners is displayed, a process of erasing a displayed channel banner is performed. When none of the channel banners is displayed, no process is performed. After step S320, the control of the recommended program notification device goes to step S301.

(Step S321) As in step S109, the recommended program notification device erases a notification screen. After step S321, the control of the recommended program notification device goes to step S303.

(Step S322) As in step S320, the recommended program notification device erases a channel banner. After step S322, the control of the recommended program notification device goes to step S301.

As described above, according to the recommended program notification device of this embodiment, a notification screen is displayed and erased in association with a channel display. Therefore, the user can use the recommended program notification function without knowledge of an operation method. In addition, by erasing a notification screen in association with the end of a channel display, the user can erase the channel display and the notification screen together without learning a new operation.

### <Fourth embodiment>

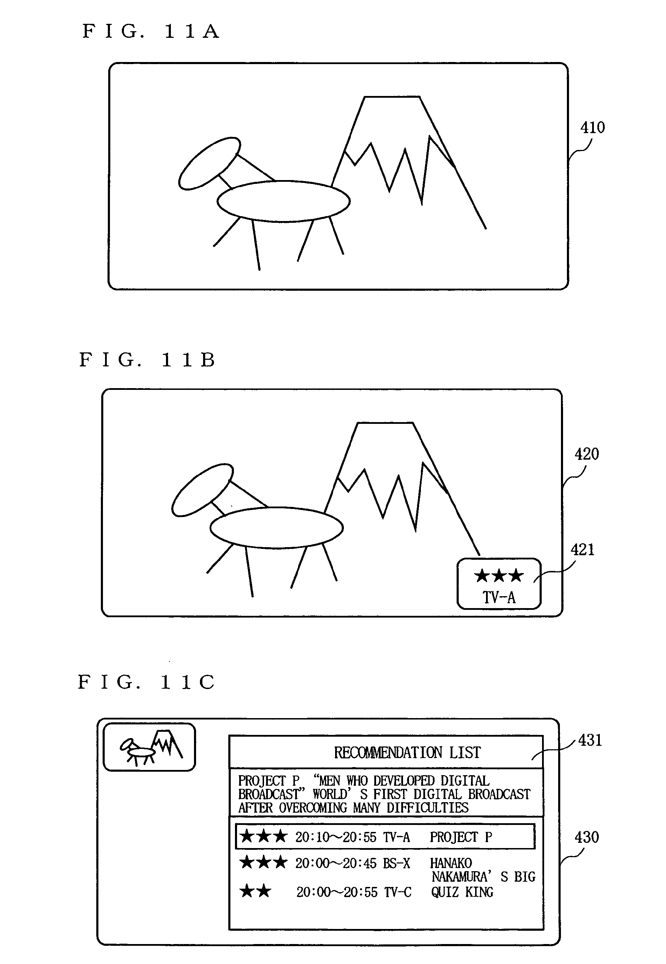

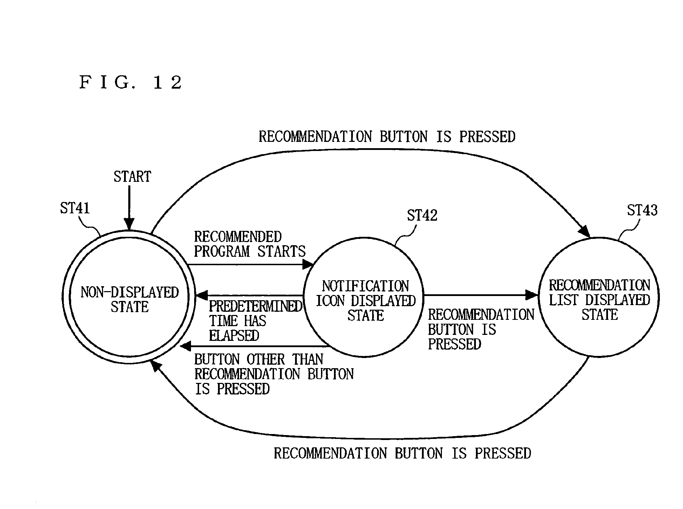

In the fourth embodiment, a method of changing the information amount of a recommended program every time the recommendation button is pressed, will be described. FIGS. 11A to 11C are diagrams illustrating GUI displays in the recommended program notification device of this embodiment. FIG. 12 is a state transition diagram of the recommended program notification device of this embodiment. As illustrated in FIG. 12, the recommended program notification device of this embodiment performs state transitions between a non-displayed state ST41, a notification icon displayed state ST42, and a recommendation list displayed state ST43. Screens 410, 420, and 430 illustrated in FIGS. 11A to 11C are exemplary screens in the non-displayed state ST41, the notification icon displayed state ST42, and the recommendation list displayed state ST43, respectively.

Changing of displayed screens in the recommended program notification device of this embodiment will be described with reference to FIGS. 11A to 11C and 12. In the non-displayed state ST41, as illustrated in FIG. 11A, only a selected-station program video is displayed on the full screen 410. In the notification icon displayed state ST42, as illustrated in FIG. 11B, a selected-station program video is displayed on the full screen 420, which is overlaid with a notification icon 421. In the recommendation list displayed state ST43, as illustrated in FIG. 11C, the screen 430 which includes a PinP screen including a selected-station program video and a recommendation list window 431 is displayed.

The notification icon 421 includes stars indicating a program recommendation level, and a broadcast channel on which a recommended program is broadcast. The screen 430 and the recommendation list window 431 are assumed to be the same as the screen 130 and the recommendation list window 132 of FIG. 2C, respectively. The recommendation list window 431 includes more detailed information about a recommended program.

In an initial state, the recommended program notification device is in the non-displayed state ST41, and displays, for example, the screen 410 of FIG. 11A. In the recommended program notification device of this embodiment, as in the first embodiment, the UI control section 3 detects timing with which a recommended program starts, as notification timing with which a notification screen is displayed. When the notification timing is detected (i.e., a recommended program starts) in the non-displayed state ST41, the recommended program notification device goes to the notification icon displayed state ST42. When the recommendation button is pressed in the non-displayed state ST41, the recommended program notification device goes to the recommendation list displayed state ST43.

In the notification icon displayed state ST42, the recommended program notification device displays, for example, the screen 420 including the notification icon 421 (FIG. 11B). The recommended program notification device calculates an elapsed time since the transition to this state in the notification icon displayed state ST42. When the recommendation button is pressed in the notification icon displayed state ST42, the recommended program notification device goes to the recommendation list displayed state ST43. When a predetermined time (e.g., 30 seconds) has elapsed in the notification icon displayed state ST42, or when a button other than the recommendation button is pressed, the recommended program notification device goes to the non-displayed state ST41. Note that, when the enter button is pressed in the notification icon displayed state ST42, the recommended program notification device may display a video of a recommended program or a program content about the recommended program on the full screen.

In the recommendation list displayed state ST43, the recommended program notification device displays, for example, the screen 430 including a selected-station program video and a program video recommendation list window 431 (FIG. 11C). When the recommendation button is pressed in the recommendation list displayed state ST43, the recommended program notification device goes to the non-displayed state ST41. Note that, when the enter button is pressed in the recommendation list displayed state ST43, the recommended program notification device may display a video of a recommended program or a program content about the recommended program on the full screen.

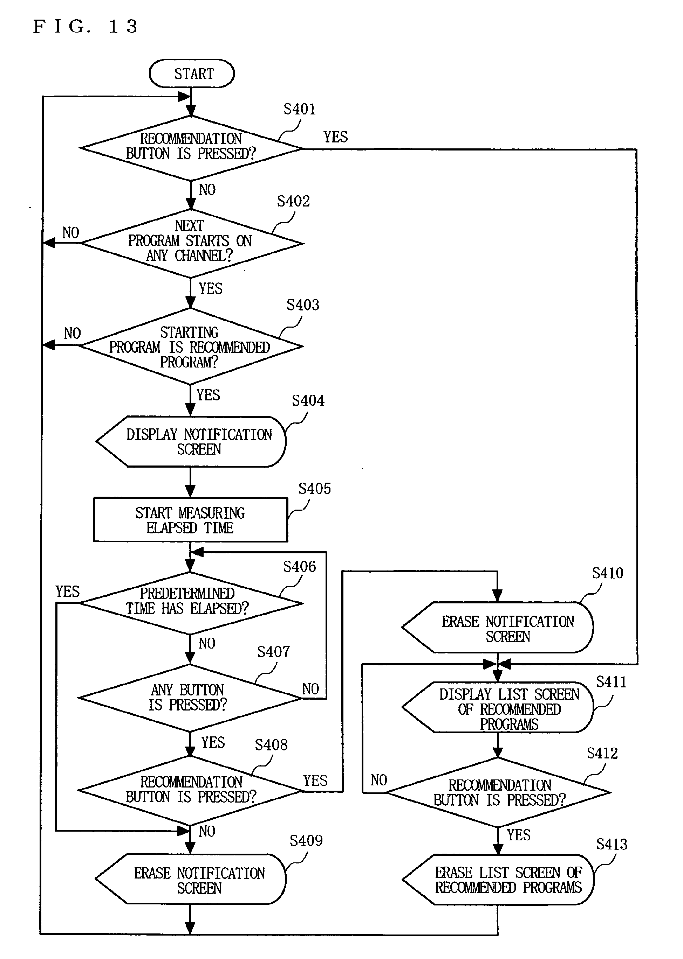

FIG. 13 is a flowchart of a notification process of the recommended program notification device of this embodiment. Among steps illustrated in FIG. 13, steps S401 to S403, S409, and S413 correspond to the non-displayed state ST41, steps S404 to S408 correspond to the notification icon displayed state ST42, and steps S410 to S412 correspond to the recommendation list displayed state ST43.

(Step S401) When the recommendation button is pressed, the control of the recommended program notification device goes to step S411, and when otherwise, the control of the recommended program notification device goes to step S402. In this step, the UI control section 3 determines whether or not the recommendation button has been pressed, based on operation information output from the input section 5.

(Step S402) As in step S101, when the next program starts on any channel which is currently broadcasting, the control of the recommended program notification device goes to step S403, and when otherwise, the control of the recommended program notification device goes to step S401.

(Step S403) As in step S102, when the starting program is a recommended program, the control of the recommended program notification device goes to step S404, and when otherwise, the control of the recommended program notification device goes to step S401.

(Step S404) The recommended program notification device displays the notification icon 421. In this step, the UI control section 3 outputs drawing information for displaying the notification icon 421. Thereby, as illustrated in FIG. 11B, the display section 9 displays the screen 420 including the notification icon 421.

(Step S405) As in step S104, the recommended program notification device starts measuring an elapsed time.

(Step S406) When a predetermined time has elapsed, the control of the recommended program notification device goes to step S409, and when otherwise, the control of the recommended program notification device goes to step S407.

(Step S407) As in step S106, when any button is pressed, the control of the recommended program notification device goes to step S408, and when otherwise, the control of the recommended program notification device goes to step S406.

(Step S408) As in step S107, when the button which it is determined in step S407 that has been pressed is a recommendation button, the control of the recommended program notification device goes to step S410, and when otherwise, the control of the recommended program notification device goes to step S409.

(Step S409) The recommendedprogramnotification device erases the notification icon 421. In this step, the UI control section 3 deletes drawing information about the notification icon 421. After step S409, the control of the recommended program notification device goes to step S401.

(Step S410) As in step S409, the recommended program notification device erases the notification icon 421.

(Step S411) As in step S108, the recommended program notification device displays a list screen of recommended programs (specifically, the recommendation list window 431).

(Step S412) As in step S401, when the recommendation button is pressed, the control of the recommended program notification device goes to step S413, and when otherwise, the control of the recommended program notification device goes to step S411.

(Step S413) The recommended program notification device erases the recommended program list screen (specifically, the recommendation list window 431). In this step, the UI control section 3 erases drawing information about the recommendation list window 431. After step S413, the control of the recommendedprogram notification device goes to step S401.

As described above, according to the recommended program notification device of this embodiment, if the user inputs a recommendation control instruction which is generated by pressing the recommendation button, the program recommendation function can be used, irrespective of the displayed state of a notification screen. By inputting a recommendation control instruction a required number of times, the information amount of a recommended program can be changed in a stepwise manner. Therefore, the user can correctly determine whether or not to view a program based on necessary and sufficient information. In addition, since the notification screen does not include information more than necessary, it is possible to reduce the notification screen, thereby making it possible to prevent viewing of a program from being obstructed.

### <Fifth embodiment>

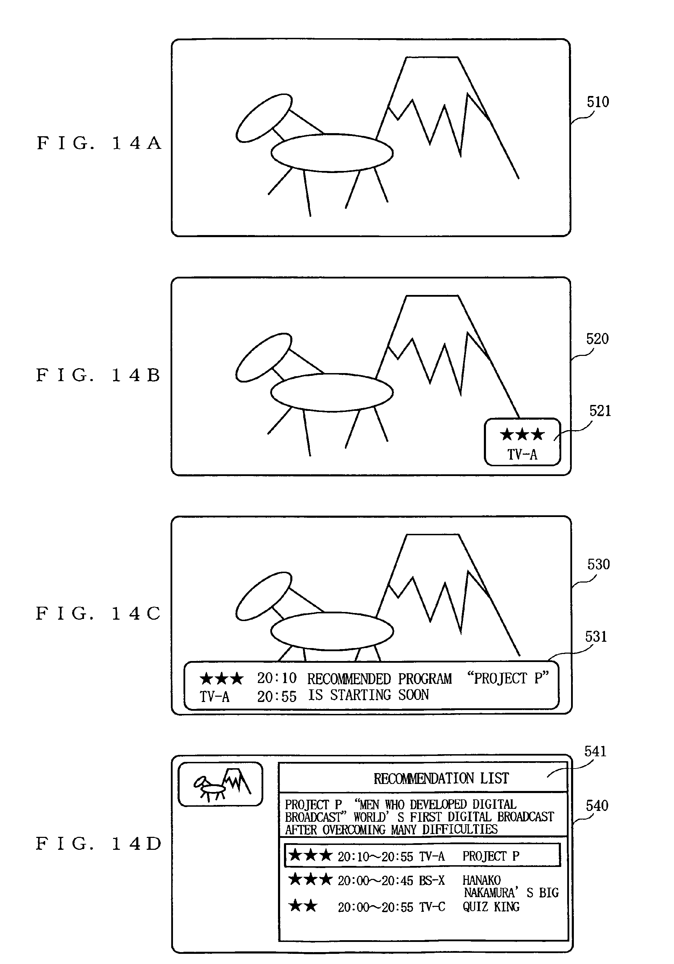

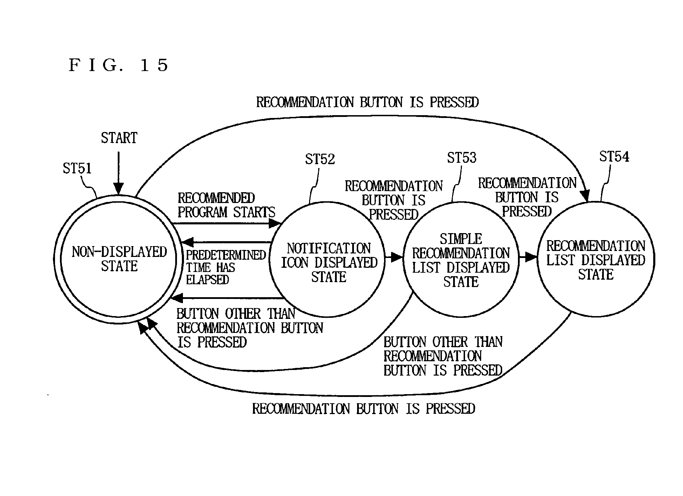

In the fifth embodiment, as in the fourth embodiment, a method of changing the information amount of a recommended program every time the recommendation button is pressed, will be described. Note that, in this embodiment, the number of steps which change the information amount is larger by one than that of the fourth embodiment. FIGS. 14A to 14D are diagrams illustrating GUI displays in the recommended program notification device of this embodiment. FIG. 15 is a state transition diagram of the recommended program notification device of this embodiment. As illustratedinFIG. 15, the recommended program notification device of this embodiment performs state transitions between a non-displayed state ST51,a notificationicon displayed state ST52, a simple recommendation list displayed state ST53, and a recommendation list displayed state ST54. Screens 510, 520, 530, and 540 illustrated in FIGS. 14A to 14D are exemplary screens in the non-displayed state ST51, the notificationicon icon displayed state ST52, the simple recommendation list displayed state ST53, and the recommendation list displayed state ST54, respectively.

Changing of displayed screens in the recommended program notification device of this embodiment will be described with reference to FIGS. 14A to 14D and 15. In the non-displayed state ST51, as illustrated in FIG. 14A, only a selected-station program video is displayed on the full screen 510. In the notification icon displayed state ST52, as illustrated in FIG. 14B, a selected-station program video is displayed on the full screen 520, which is overlaid with a notification icon 521. In the simple recommendation list displayed state ST53, as illustrated in FIG. 14C, a selected-station program video is displayed on the full screen 530, which is overlaid with a simple recommendation list 531. In the recommendation list displayed state ST54, as illustrated in FIG. 14D, the screen 540 which includes a PinP screen including a selected-station program video and a recommendation list window 541 is displayed.

Note that the screen 520 and the notification icon 521 are the same as the screen 420 and the notification icon 421 (FIG. 11B), respectively. The screen 530 and the simple recommendation list 531 are the same as the screen 120 and the notification screen 121 (FIG. 2B), respectively. The screen 540 and the recommendation list window 541 are the same as the screen 430 and the recommendation list window 431 (FIG. 11C).

The state transition diagram of FIG. 15 is the same as the state transition diagram (FIG. 12) of the recommended program notification device of the fourth embodiment, except that the simple recommendation list displayed state ST53 is added. In an initial state, the recommended program notification device is in the non-displayed state ST51, and displays, for example, the screen 510 of FIG. 14A. In the recommended program notification device of this embodiment, as in the first embodiment, the UI control section 3 detects timing with which a recommended program starts, as notification timing with which a notification screen is displayed. When the notification timing is detected (i.e., a recommended program starts) in the non-displayed state ST51, the recommended program notification device goes to the notification icon displayed state ST52. When the recommendation button is pressed in the non-displayed state ST51, the recommended program notification device goes to the recommendation list displayed state ST54.

In the notification icon displayed state ST52, the recommended program notification device displays, for example, the screen 520 including the notification icon 521 (FIG. 14B). In the notification icon displayed state ST52, the recommended program notification device calculates an elapsed time since the transition to this state. When the recommendation button is pressed in the notification icon displayed state ST52, the recommended program notification device goes to the simple recommendation list displayed state ST53. When a predetermined time (e.g., 30 seconds) has elapsed in the notification icon displayed state ST52, or when a button other than the recommendation button is pressed, the recommended program notification device goes to the non-displayed state ST51. Note that, when the enter button is pressed in the notification icon displayed state ST52, the recommended program notification device may display a video of a recommended program or a program content about the recommended program on the full screen.

In the simple recommendation list displayed state ST53, the recommended program notification device displays, for example, the screen 530 including the simple recommendation list 531 (FIG. 14C). When the recommendation button is pressed in the simple recommendation list displayed state ST53, the recommended program notification device goes to the recommendation list displayed state ST54. This state transition is performed when the user is interested in a program included in the simple recommendation list 531 and wants to obtain more detailed information. When a button other than the recommendation button is pressed in the simple recommendation list displayed state ST53, the recommended program notification device goes to the non-displayed state ST51. Note that, when the enter button is pressed in the simple recommendation list displayed state ST53, the recommended program notification device may display a video of a recommended program or a program content about the recommended program on the full screen.

In the recommendation list displayed state ST54, the recommended program notification device displays, for example, the screen 540 including a selected-station program video and the recommendation list window 541 (FIG. 14D). When the recommendation button is pressed in the recommendation list displayed state ST54, the recommended program notification device goes to the non-displayed state ST51. Note that, when the enter button is pressed in the recommendation list displayed state ST54, the recommended program notification device may display a video of a recommended program or a program content about the recommended program on the full screen.

As described above, when the recommendation button is pressed while the notification icon 521 is not being displayed, the recommended program notification device performs alternating transitions between the non-displayed state ST51 and the recommendation list displayed state ST54. When the recommendation button is pressed while the notification icon 521 is being displayed, the recommended program notification device goes to the simple recommendation list displayed state ST53. In this case, when the recommendation button is pressed again, the recommended program notification device further goes to the recommendation list displayed state ST54. In this case, every time the recommendation button is pressed, the information amount of a recommended program is increased in a stepwise manner. Therefore, by pressing the same recommendation button a required number of times, the user can obtain more detailed information about the same recommended program.

Note that the notification icon 521 may have any function of notifying of the existence of a recommended program, and may not necessarily include information, such as a program recommendation level, a broadcast channel, or the like. The recommended program notification device may notify of the existence of a recommended program using a means different from the notification icon 521. For example, the recommended program notification device may turn on a lamp (e.g., a light emitting diode (LED)) which is provided separately from the display section 9, in order to notify of the existence of a recommended program. Alternatively, the recommended program notification device may provide a sensation in addition to a visual sensation, such as generation of any sound, vibration of a remote control device, or the like.

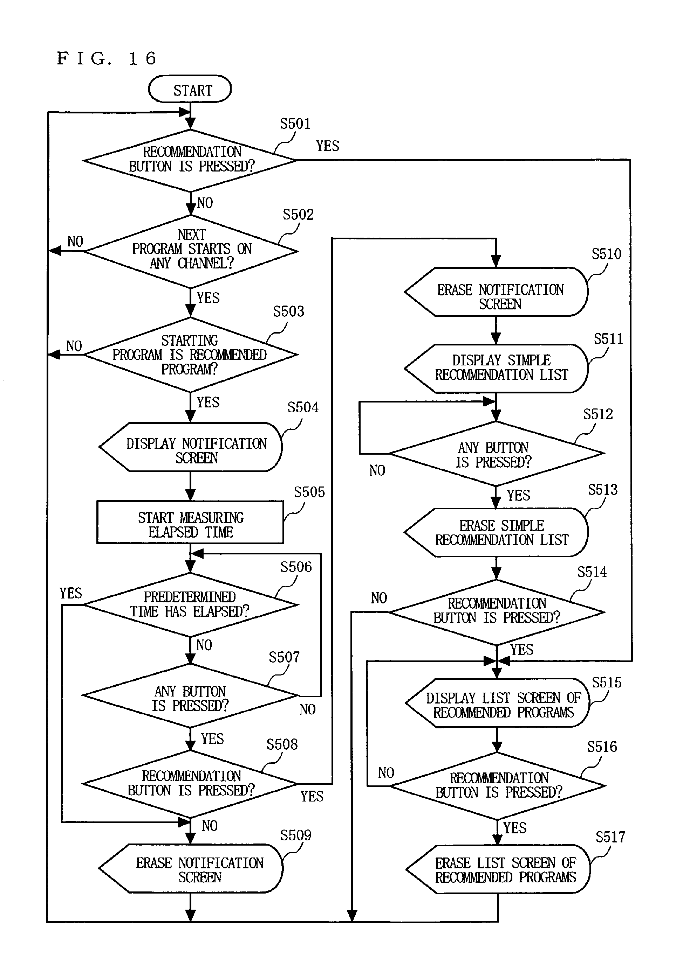

FIG. 16 is a flowchart of a notification process of a recommended program notification device of the fifth embodiment. Among steps illustrated in FIG. 16, steps S501 to S503, S509, and S517 correspond to the non-displayed state ST51, steps S504 to S508 correspond to the notification icon displayed state ST52, steps S510 to S512 correspond to the simple recommendation list displayed state ST53, and steps S513 to S516 correspond to the recommendation list displayed state ST54. Steps S501 to S510 and steps S515 to S517 are the same as steps S401 to S410 and steps S411 to S413, respectively, and will not be here described.

(StepS511) The recommended program notification device displays the simple recommendation list 531. In this step, the UI control section 3 outputs drawing information for drawing the simple recommendation list 531 based on recommendation information output from the recommendation process section 2. Thereby, as illustrated in FIG. 14C, the display section 9 displays the screen 530 including the simple recommendation list 531.

(Step S512) As in step S106, when any button is pressed, the control of the recommended program notification device goes to step S513, and when otherwise, the control of the recommended program notification device continues to be in step S512.

(Step S513) The recommended program notification device erases the simple recommendation list 531. In this step, the UI control section 3 erases drawing information about the simple recommendation list 531.

(Step S514) As in step S107, when a button which is determined that has been pressed in step S512 is a recommendation button, the control of the recommended program notification device goes to step S515, andwhen otherwise, the control of the recommended program notification device goes to step S501.

As described above, the recommended program notification device of this embodiment includes the simple recommendation list displayed state. Thereby, in addition to the effect of the fourth embodiment, the user can obtain necessary and sufficient information for determining whether or not to view a program.

### <Sixth embodiment>

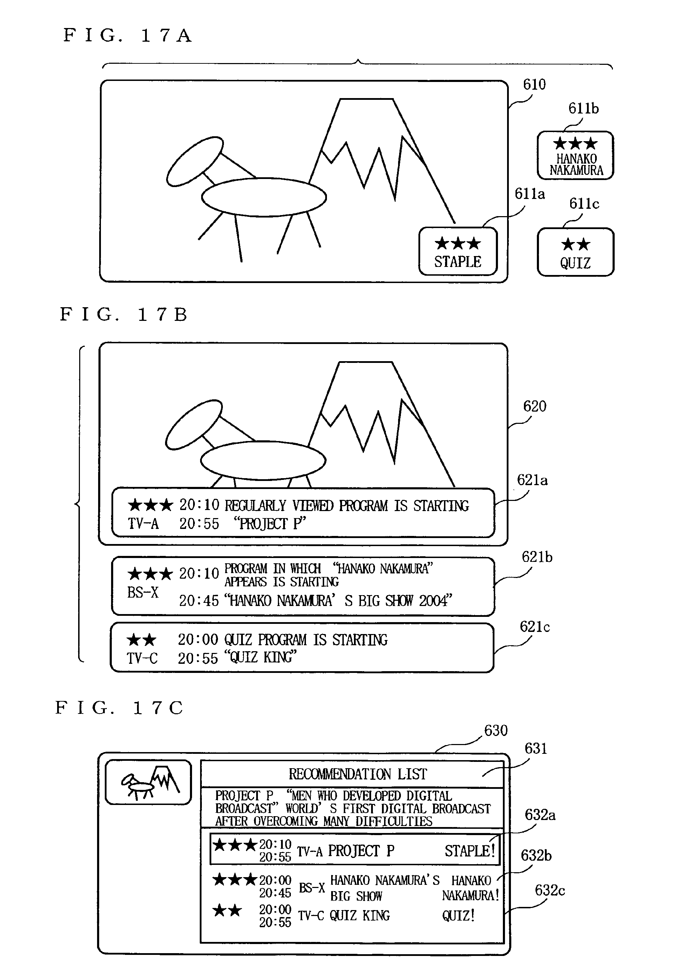

In the sixth embodiment, a method of notifying of a reason for recommendation of a program (information for causing the user to understand why the recommended program notification device recommends the program) in addition to identification information (e.g., a program title) about the recommended program when notifying of the recommended program, will be described. FIG. 17 is a diagram indicating a GUI display in the recommended program notification device of this embodiment. As has been described in the fifth embodiment, as a method of notifying of a recommended program, for example, there are a method of using a notification icon, a method of using a simple recommendation list, a method of using a recommendation list window, and the like.

A screen 610 illustrated in FIG. 17A is an exemplary screen including a recommendation reason in a notification icon. Any of notification icons 611a to 611c is overlaid and displayed on the screen 610. The notification icons 611a to 611c include the recommendation level of a program (represented by the number of stars), and in addition, a recommendation reason for the program. More specifically, the notification icon 611a includes a character string "staple" indicating that the recommendation reason is that the program is frequently viewed. Note that, instead of the character string "staple", a character string, such as "frequently viewed", "regular", "familiar", or the like, or a symbol indicating repetition may be included in the notification icon 611a. The notification icon 611b includes a character string "Hanako Nakamura" indicating that the recommendation reason is that a specific performer "Hanako Nakamura" appears in a program. The notification icon 611c includes a character string "quiz" indicating that the recommendation reason is that the program belongs to a specific genre (also referred to as a category) "quiz".

A screen 620 illustrated in FIG. 17B is an exemplary screen including a recommendation reason in a simple recommendation list. Any of simple recommendation lists 621a to 621c is overlaid and displayed on the screen 620. The simple recommendation lists 621a to 621c include the recommendation level, broadcast channel, start time, endtime , andprogramtitle of a program, and in addition, a recommendation reason for the program. More specifically, the simple recommendation list 621a includes a character string "regularly viewed program is starting" indicating that the recommendation reason is that the program is frequently viewed. The simple recommendation list 621b includes a character string "program in which 'Hanako Nakamura' appears is starting"indicating that the recommendation reason is that the specific performer "Hanako Nakamura" appears in the program. The simple recommendation list 621c includes a character string "quiz program is starting" indicating that the recommendation reason is that the program belongs to a specific genre "quiz".

A screen 630 of FIG. 17C is an exemplary screen including a recommendation reason in a recommendation list window. The screen 630 includes a program recommendation list 631. The program recommendation list 631 includes, as recommendation information 632a to 632c, the recommendation level, broadcast channel, start time, end time, and program title of each program, and in addition, a recommendation reason for the program. The recommendation information 632a includes a character string "staple!" indicating that the recommendation reason is that the program is frequently viewed. The recommendation information 632b includes a character string "Hanako Nakamura!" indicating that the recommendation reason is that the specific performer "Hanako Nakamura" appears in the program. The recommendation information 632c includes a character string "quiz ! " indicating that the recommendation reason is that the program belongs to the specific genre "quiz".

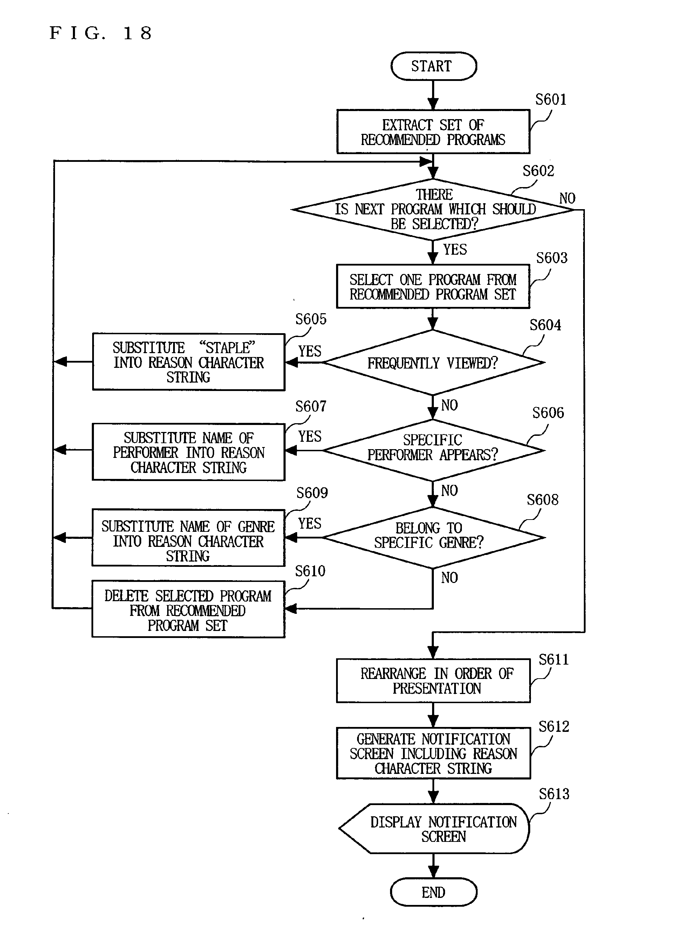

FIG. 18 is a flowchart of a notification process of the recommended program notification device of this embodiment. In the notification process of this embodiment, the following steps are executed.

(Step S601) The recommended program notification device extracts a set of recommended programs. In this step, the recommendation process section 2 searches content attributes obtained from the content attribute management section 10 to extract a list of recommended programs. The result of the extraction is output as recommendation information to the UI control section 3.

(Step S602) When there is the next program which should be selected, the control of the recommended program notification device goes to step S603, and when otherwise, the control of the recommended program notification device goes to step S611.

(Step S603) The recommended program notification device selects one program from the set of recommended programs extracted in step S601.

(Step S604) When the program selected in step S603 is frequently viewed, the control of the recommended program notification device goes to step S605, and when otherwise, the control of the recommended program notification device goes to step S606. In this step, the UI control section 3 inquires of the recommendation process section 2 whether or not the recommendation reason for the program selected in step S603 is that the program is frequently viewed.

(Step S605) The recommended program notification device substitutes the character string "staple" into a reason character string. In this step, the UI control section 3 outputs drawing information for displaying any of a notification icon 611, a simple recommendation list 621, and a recommendation information 632. After step S605, the control of the recommended program notification device goes to step S602.

(Step S606) When the program selected in step S603 is a program in which a specific performer appears, the control of the recommended program notification device goes to step S607, and when otherwise, the control of the recommended program notification device goes to step S608. In this step, the UI control section 3 inquires of the recommendation process section 2 whether or not the recommendation reason for the program selected in step S603 is that a specific performer appears in the program. When the result of the inquiry is positive, the recommendation process section 2 returns the inquiry result to which information for identifying the performer is attached.

(Step S607) The recommended program notification device substitutes the name of the performer into a reason character string. In this step, the UI control section 3 obtains the name of the performer from the information for identifying the performer which is returned in step S606. After step S607, the control of the recommended program notification device goes to step S602.

(Step S608) When the program selected in step S603 belongs to a specific genre, the control of the recommended program notification device goes to step S609, and when otherwise, the control of the recommended program notification device goes to step S610. In this step, the UI control section 3 inquires of the recommendation process section 2 whether or not the recommendation reason for the program selected in step S603 is that the program belongs to a specific genre. When the result of the inquiry is positive, the recommendation process section 2 returns the inquiry result to which information for identifying the performer is attached.

(StepS609) The recommended program notification device substitutes the name of the genre into a reason character string. In this step, the UI control section 3 obtains the genre name from the information for identifying the genre which is returned in step S608. After step S609, the control of the recommended program notification device goes to step S602.

(Step S610) The recommendedprogramnotification device deletes the program selected in step S603 from the recommended program set. Thereby, a program for which an appropriate recommendation reason was not able to be discovered is removed from the recommended program set. After step S610, the control of the recommended program notification device goes to step S602.

As described above, a set of recommended programs is extracted in step S601, one recommended program is selected in step S603, and a recommendation reason is obtained for the selected program in steps S604 to S609. After the process of obtaining a recommendation reason for all recommended programs is completed, the control of the recommended program notification device goes to step S611.

(Step S611) The recommended program notification device rearranges the programs included in the recommended program set in order of presentation.

(step S612) The recommended program notification device generates a notificationscreenincluding a reason character string. In this step, the UI control section 3 outputs drawing information for displaying a notification screen including the character string which is substituted in any of steps S605, S607, and S609.

(Step S613) The recommended program notification device displays the notification screen generated in step S612. Thereby, the display section 9 displays any of the screens 610, 620, and 630 of FIGS. 17A to 17C.

Although it has been described that the recommended program notification device obtains three types of recommendation reasons, the program recommendation reason is not limited to those described above. For example, a recommendation reason for a program may be that a specific character string is contained in a document accompanying the program. Particularly, a free keyword which is an arbitrary character string input by the user using a keyboard or the like may be used as the specific character string, and the title, content description, or the like of the program may be used as the document accompanying the program. When the recommendation reason is that a specific character string is included in the document accompanying the program, the recommended program notification device may display a notification screen similar to that when a recommendation reason about a performer is detected.

As described above, according to the recommended program notification device of this embodiment, a notification screen including a recommendation reason for a program is displayed. Therefore, the user can quickly determine whether or not to view the program, based on the displayed recommendation reason. In addition, since a program which does not have an appropriate recommendation reason is not included in the notification screen, further narrowed recommended program candidates can be preferentially presented to the user. Although the method of notifying of a program recommendation reason included in a notification icon, a simple recommendation list, or the like has been described in this embodiment, this method may be applied to the recommended program notification devices of the first to fifth embodiments. Specifically, the recommended program notification device of each embodiment may additionally display a recommendation reason for a program when a program content of the recommended program is displayed on the full screen.

Note that the recommended program notification device of each embodiment can be configured using a computer, and a computer recordable recording medium which records a program for executing the recommended program notification method on the computer.

### INDUSTRIAL APPLICABILITY

The recommended program notification method and the recommended program notification device of the present invention have an effect of automatically notifying of the existence of a program which fits a user' s preference in a quick and simple manner, and therefore, can be used for notification of a recommended program using GUI in a television set, an Internet broadcast reception device, a computer connected to a content distribution system, and the like.

## Claims

1. A recommended program notification method of notifying a user of a recommended program, comprising the steps of:
inputting a user's instruction including a recommendation control instruction;
detecting notification timing with which a notification of a recommended program is performed, when the recommendation control instruction is not input; and
displaying a notification screen indicating the existence of a recommended program when the notification timing is detected.

2. The recommended program notification method according to claim 1, wherein the notification timing detecting step detects timing with which a recommended program starts, as the notification timing.

3. The recommended program notification method according to claim 1, wherein the notification timing detecting step detects timing with which selected stations are changed, as the notification timing.

4. The recommended program notification method according to claim 1, where the notification timing detecting step detects timing with which a channel display starts, as the notification timing.

5. The recommended program notification method according to claim 4, further comprising erasing the notification screen when the channel display is ended.

6. The recommended program notification method according to claim 5, wherein the channel display starts and ends, depending on an input channel display control instruction.

7. The recommended program notification method according to claim 1, further comprising displaying a list screen indicating a list of recommended programs when the recommendation control instruction is input while the notification screen is being displayed.

8. The recommended program notification method according to claim 1, further comprising displaying a video of a recommended program when the recommendation control instruction is input while the notification screen is being displayed.

9. The recommended program notification method according to claim 1, further comprising erasing the notification screen when a predetermined time has elapsed while the notification screen is being displayed.

10. The recommended program notification method according to claim 1, further comprising erasing the notification screen when an instruction other than the recommendation control instruction is input while the notification screen is being displayed.

11. The recommended program notification method according to claim 1, further comprising changing an information amount of a recommended program included in the notification screen when the recommendation control instruction is input.

12. The recommended program notification method according to claim 11, wherein as the information amount changing step, the following steps are included:
displaying a list screen indicating a list of recommended programs when the recommendation control instruction is input while the notification screen is not being displayed;
erasing the notification screen and displaying the list screen when the recommendation control instruction is input while the notification screen is being displayed; and
erasing the list screen and displaying a video of a recommended program when the recommendation control instruction is input while the list screen is being displayed.

13. The recommended program notification method according to claim 12, wherein the notification screen is an icon which is overlaid and displayed on a program video.

14. The recommended program notification method according to claim 11, wherein as the information amount changing step, the following steps are included:
displaying a list screen indicating a list of recommended programs when the recommendation control instruction is input while the notification screen is not being displayed;
erasing the notification screen and displaying a simple list screen having a less information amount than that of the list screen when the recommendation control instruction is input while the notification screen is being displayed;
erasing the simple list screen and displaying the list screen when the recommendation control instruction is input while the simple list screen is being displayed; and
erasing the list screen and displaying a video of a recommended program when the recommendation control instruction is input while the list screen is being displayed.

15. The recommended program notification method according to claim 14, wherein the notification screen is an icon which is overlaid and displayed on a program video, and
the simple list screen is a window which is overlaid and displayed on a program video.

16. The recommended program notification method according to claim 1, further comprising:
obtaining a recommendation reason for a program; and
including the obtained recommendation reason in the notification screen, wherein the obtained recommendation reason is in a form which can be recognized by a user.

17. The recommended program notification method according to claim 16, wherein the recommendation reason is an element selected from the group consisting of frequent viewing of a program, appearance of a specific performer in a program, belonging of a program to a specific genre, and inclusion of a specific character string in a document accompanying a program.

18. The recommended program notification method according to claim 16, wherein the notification screen is an element selected from the group consisting of an icon overlaid and displayed on a program video, a window overlaid and displayed on a program video, and a list screen indicating a list of recommended programs.

19. A recommended program notification device of notifying a user of a recommended program, comprising:
displaying means of displaying a program video;
inputting means for inputting a user's instruction including a recommendation control instruction;
controlling means of controlling a content displayed on the displaying means based on an instruction input using the inputting means; and
timing detecting means of detecting notification timing with which a notification of a recommended program is performed, when the recommendation control instruction is not input,
wherein the controlling means controls the displaying means to display a notification screen indicating the existence of a recommended program when the notification timing is detected by the timing detecting means.

20. The recommended program notification device according to claim 19, wherein the timing detecting means detects timing with which a recommended program starts, as the notification timing.

21. The recommended program notification device according to claim 19, wherein the timing detecting means detects timing with which selected stations are changed, as the notification timing.

22. The recommended program notification device according to claim 19, where the notification timing detecting means detects timing with which a channel display starts, as the notification timing.

23. The recommended program notification device according to claim 22, wherein the controlling means controls the displaying means to erase the notification screen when the channel display is ended.

24. The recommended program notification device according to claim 23, wherein the channel display starts and ends, depending on an input channel display control instruction.

25. The recommended program notification device according to claim 19, wherein the controlling means controls the displaying means to display a list screen indicating a list of recommended programs when the recommendation control instruction is input while the notification screen is being displayed.

26. The recommended program notification device according to claim 19, wherein the controlling means controls the displaying means to display a video of a recommended program when the recommendation control instruction is input while the notification screen is being displayed.

27. The recommended program notification device according to claim 19, wherein the controlling means controls the displaying means to erase the notification screen when a predetermined time has elapsed while the notification screen is being displayed.

28. The recommended program notification device according to claim 19, wherein the controlling means controls the displaying means to erase the notification screen when an instruction other than the recommendation control instruction is input while the notification screen is being displayed.

29. The recommended program notification device according to claim 19, wherein the controlling means changes an information amount of a recommended program included in the notification screen when the recommendation control instruction is input.

30. The recommended program notification device according to claim 29, wherein the controlling means controls the displaying means to display a list screen indicating a list of recommended programs when the recommendation control instruction is input while the notification screen is not being displayed;
the controlling means controls the displaying means to erase the notification screen and display the list screen when the recommendation control instruction is input while the notification screen is being displayed; and
the controlling means controls the displaying means to erase the list screen and display a video of a recommended program when the recommendation control instruction is input while the list screen is being displayed.

31. The recommended program notification device according to claim 30, wherein the notification screen is an icon which is overlaid and displayed on a program video.

32. The recommended program notification device according to claim 29, wherein the controlling means controls the displaying means to display a list screen indicating a list of recommended programs when the recommendation control instruction is input while the notification screen is not being displayed;
the controlling means controls the displaying means to erase the notification screen and display a simple list screen having a less information amount than that of the list screen when the recommendation control instruction is input while the notification screen is being displayed;
the controlling means controls the displaying means to erase the simple list screen and display the list screen when the recommendation control instruction is input while the simple list screen is being displayed; and
the controlling means controls the displaying means to erase the list screen and display a video of a recommended program when the recommendation control instruction is input while the list screen is being displayed.

33. The recommended program notification device according to claim 32, wherein the notification screen is an icon which is overlaid and displayed on a program video, and
the simple list screen is a window which is overlaid and displayed on a program video.

34. The recommended program notification device according to claim 19, wherein the controllingmeans obtains a recommendation reason for a program, and includes the obtained recommendation reason in the notification screen, wherein the obtained recommendation reason is in a form which can be recognized by a user.

35. The recommended program notification device according to claim 34, wherein the recommendation reason is an element selected from the group consisting of frequent viewing of a program, appearance of a specific performer in a program, belonging of a program to a specific genre, and inclusion of a specific character string in a document accompanying a program.

36. The recommended program notification device according to claim 34, wherein the notification screen is an element selected from the group consisting of an icon overlaid and displayed on a program video, a window overlaid and displayed on a program video, and a list screen indicating a list of recommended programs.

37. A computer recordable recording medium recording a program for causing a computer to execute the recommended program notification method according to any of claims 1 to 18.
